# EUROPEAN PATENT SPECIFICATION

(11) **EP 4 249 121 B1**
(45) Date of publication and mention of the grant of the patent: **22.05.2024**
(21) Application number: 22164100.4
(22) Date of filing: 24.03.2022
(51) Int. Cl.: B01L 3/02, G01N 35/10, G01N 1/31

(54) **PIPETTE TIP EXTENSION**
VERLÄNGERUNG EINER PIPETTENSPITZE
EXTENSION D'EMBOUT DE PIPETTE

(43) Date of publication of application: 27.09.2023
(73) Proprietor: TECAN Trading AG, 8708 Männedorf (CH)
(72) Inventor: SAGER, Adrian, 8708 Männedorf (CH)
(74) Representative: Troesch Scheidegger Werner AG

(56) References cited:
- WO-A1-2020/131070
- WO-A1-2020/131072
- WO-A1-2020/132394

## Description

### TECHNICAL FIELD OF THE INVENTION

The current invention relates to a pipette tip extension according to claim 1 for interacting with areas of interest of biological samples. The pipette tip extension is attachable to a pipette tip.

### DESCRIPTION OF THE RELATED ART

Different types of pipette tip extensions have been disclosed in detail in WO 2020/ 131072 A1 and WO 2020/13232394 A1 by the same applicant as an alternative device and for an alternative method to specifically address and treat a locally restricted area of interest of a sample, in particular a biological sample, e.g., for histopathological diagnosis or DNA/RNA analysis. As these applications have laid the basis for the present invention, parts of WO2020/13232394 have been introduced to the present application for ease of understanding and complementation as will be explained with the brief description of the figures below in detail.

Prototypes of respective pipette tip extensions have been produced in a two-part design where the sealing function of the pipette tip extension towards a sample test slide has been transferred to a separate sealing or gasket, which is a good mechanical solution but ads to the costs if such pipette tip extensions should be used for high volume analytics as with PCR tests or similar.

Many tests with different plastic materials have been made to produce pipette tip extensions in various one-part designs. However, it has been found that form stability and structural robustness, necessary to maintain the flow geometry during dispense and aspiration operations with the pipette tip extension pressed on the test slide, do not go easy with the need to seal the gap between the slide and the pipette tip extension reliably for many plastics. In addition, it was found that some plastics seem to interfere with highly sensible DNA/RNA probes which were dissolved and/or washed from the surface from the test slides with a respective analytical fluid by the dispense and aspiration operation(s). At the same time, it has been found that stickiness of many plastics having good sealing properties is a further obstacle for high precession analytics following the sample extraction due to the risk of dust or particle adhesion on the surface of respective pipette tip extensions.

Further on it has been found that uniform washing and/or dissolving of samples from the surface of the test slides could be detrimental influenced by only minor flow irregularities of the test fluid in the gap between the slide and the pipette tip extension.

### SUMMARY OF THE INVENTION

It is an object of the present invention to improve the function of known pipette tip extensions and to avoid at least some of the drawbacks as mentioned above, to provide a pipette tip extension which can be easily handled and economically produced.

A pipette tip extension according to the invention is attachable to a pipette tip and comprises a proximal end, a distal end, and an exterior wall extending between the proximal end and the distal end. The exterior wall has an outer side and an inner side and forms at the proximal end a reception aperture for inserting a pipette tip. The exterior wall forms at the distal end a dispense aperture. The pipette tip extension comprises an inner cavity enclosed by the inner side of the exterior wall, and a distance element connected to the inner side of the exterior wall. The distance element is configured to position a pipette tip within the inner cavity and to establish a fluid uptake area adjacent to the inner side of the exterior wall. The fluid uptake area extends from the dispense aperture towards the reception aperture and is in fluid connection with the surrounding atmosphere at the reception aperture. The pipette tip extension is configured as an integrally produced workpiece and made of a non-polar olefine based polypropylene composition. Non-polar herby is used in the usual sense, i.e. the polymer does not show a positive or negative charging. The **polypropylene** (**PP**) composition comprises at least 85 wt-%, e.g. from 90-100 wt-%, especially from 95-100 wt-%, of a **heterophasic polypropylene copolymer** (**h-PP**), the latter comprising a **propylene random copolymer matrix phase** (**r-PPM**), an **elastomeric propylene copolymer** (**e-PP**) dispersed in the matrix, and optionally **polyethylene** (**PE**) dispersed in the matrix, whereat the polypropylene composition has:
a shore hardness D from 45-60, e.g. from 48-56, especially of 53±2. In an embodiment, which is especially adapted for injection molding, the polypropylene composition has:
- a melting temperature between 130-160°C, e.g. 135-150°C, especially from 138-148°C, which can preferably be 141±1°C, and
- a melt flow rate (MFR, 230°C/2.16kg) according to ISO 1133 from 0.5-6.0 g/10 min, e.g. from 1.0-5.0 g/10 min, and more preferably from 1.5-4.0 g/10 min, especially 3.9±0.1 g/10min.

In an embodiment of the invention, which may be combined with any other of the embodiments the heterophasic polypropylene copolymer (h-PP) comprises at least 65 to 90 wt-%, e.g. 70 to 80 wt %, especially 76±2 wt-% of the propylene random copolymer matrix phase (r-PPM), whereat the comonomer of r-PPM is ethylene and/or C₄ to C₁₂ olefins, e.g. α-olefins, and the h-PP comprises 15 to 35 wt-%, e.g. 20 to 30 wt- %, especially 24±2 wt-% of a dispersed phase comprising an elastomeric propylene copolymer (e-PP) having ethylene and/or C₄ to C₁₂ olefins, e.g. α-olefins, as comonomer. By adjusting the content of the e-PP in the matrix, hardness, elasticity, respectively the flexural modulus and the surface friction of the pipette tip extension can be adjusted. According to the present invention the xylene cold soluble (XCS) fraction of heterophasic propylene copolymer (h-PP), determined at 25 °C according ISO 16152, is regarded as the elastomeric propylene copolymer (e-PP). It is in particular appreciated that the xylene cold soluble (XCS) fraction of the r-PP has a rather low intrinsic viscosity (IV) measured according to ISO 1628-1 (at 135 °C in decalin) from 0.6 to 2.1 dl/g, or 0.8 to 1.3 dl/g which reflects a low average molecular weight.

Further it is preferred that the heterophasic propylene copolymer (h-PP) comprises as polymer components only the random propylene copolymer (r-PP) and the elastomeric propylene copolymer (e-PP). In other words, the heterophasic propylene copolymer (h-PP) may contain further additives but no other polymer in an amount exceeding 5 wt-%, more preferably exceeding 3 wt-%, like exceeding 1 wt-%, based on the total heterophasic propylene copolymer (h-PP), more preferably based on the polymers present in the propylene copolymer (h-PP).

In an embodiment of the invention, which may be combined with any other of the embodiments the material of the pipette tip extension comprises an h-PP whereat the r-PPM has ethylene as comonomer and/or the e-PP has ethylene as comonomer. Therewith the ethylene comonomer content of the r-PPM can be 3 to 20 wt-%, e.g. 5 to 15wt-%, especially 10±1 wt-% with reference to the r-PPM, and the ethylene comonomer content of the e-PP can be 20 to 40 wt-%, e.g. 25 to 35 wt-%, especially 30±2 wt-%, with reference to the e-PP.

Optionally polyethylene (PE), preferably a low density polyethylene (LDPE) and/or a linear low density polyethylene (LLDPE), may be comprised in the polypropylene composition. The PE again is dispersed in the matrix (r-PPM). Also by adding PE to the polypropylene composition the hardness of the composition can be lowered to a desired value as mentioned above. The content of the PE dispersed in the matrix phase can be equal or less than 15 or 14.9 wt-% of the composition, e.g. 0 to 10 wt-%, especially 0 to 4.9 wt-%, which translates to a weight ration between the heterophasic propylene copolymer (h-PP) and the polyethylene (PE) within the polypropylene composition is in the range of 3/1 to 8/1.

Preferably the polyethylene (PE) has a density measured according to ISO 1180-186 in the range of 903 to 923 kg/m³, more preferably in the range of 910 to 915 kg/m³.

The heterophasic propylene copolymer (h-PP) can be produced in a sequential polymerization process comprising as an example two reactors, preferably connected in series. Accordingly, in the first reactor the matrix (r-PPM) of the heterophasic polypropylene copolymer (h-PP) can be produced and in the second reactor the elastomeric propylene copolymer (e-PP) is obtained. Whereat the r-PPM fraction can be transferred to the second reactor and in the presence of that fracture at least one ethylene and/or C₄ to C₁₂ olefin is polymerized to obtain the e-PP.

In an embodiment of the invention, which may be combined with any other of the embodiments the PP composition of the pipette tip extension may further comprise a polymeric α-nucleating agent in a range of 0.0001 to 5 wt-% of the composition. The polymeric α-nucleating agent can be as an example vinyl-alkane- or vinyl-cyclo-alkane polymer.

In a preferred embodiment the PP composition does not comprise any aromatic copolymers or other aromatic compounds contained in the composition.

In a preferred embodiment of the invention, which may be combined with any other of the embodiments, the pipette tip extension further comprises a constriction element which is connected to the inner side of the exterior wall of the pipette tip extension. The constriction element is configured to control an insertion depth of a pipette tip within the pipette tip extension and thereby to define a gap with a gap height between a distal end of an inserted pipette tip and the distal end of the pipette tip extension. The constriction element defines an end stop for a pipette tip and can be configured as a fluid-permeable sieve-like structure.

The proximal end refers in connection with the pipette tip extension to the end of the pipette tip extension which is closest to a reception aperture into which a pipette tip may be inserted. Occasionally, the proximal end might also be addressed to as the upper end of the pipette tip extension. Accordingly, the distal end refers in connection with the pipette tip extension to the end of the pipette tip extension being more distant to the reception aperture for inserting a pipette tip. Thus, the distal end is opposite to the reception aperture, and might also be addressed to as a lower end or bottom end. In connection with a pipette tip, the term proximal end refers to the upper end of the pipette tip which is for use typically attached to a pipette and the associated pipetting channel, while the term distal end refers to the lower end of the pipette tip with an outlet opening for aspirating or dispensing a liquid.

The term "a pipette tip extension attachable/attached to a pipette tip" describes essentially the same situation as the term "a pipette tip insertable/inserted into the pipette tip extension". It is described here that the pipette tip extension is configured to be connectable to a pipette tip. This may be realized in that, the diameter of the reception aperture and the dimension of the inner cavity formed by the exterior wall is adapted to the dimensions of a pipette tip which shall be inserted into the pipette tip extension. The dimensions of the reception aperture and the inner cavity allow the uptake of a specific pipette tip, and ensure that a gap is formed between the outer wall of the inner pipette tip and the inner wall of the pipette tip extension, into which gap a fluid or liquid can be moved.

A suitable pipette tip may for example be a disposable pipette tip made of a plastic material, or of a so-called fixed pipette tip, made of a metal.

In the context of the present invention, a disposable pipette tip is a pipette tip which may be taken up and/or ejected for example by a liquid handling device automatically. It may be made of a plastic material, and the connection to the liquid handling device may be realized by slightly deforming the plastic to achieve a friction fit connection between the tip and the device.

In the context of the present invention, a fixed pipette tip may be connected to the liquid handling device mechanically by form fit, for example may be screwed to the device. Mounting and dismounting typically requires a manual interaction. A fixed pipette tip may be made of a metal to ensure a stable shape.

The distance element is configured to position an inserted pipette tip at a defined distance to the inner wall of the pipette tip extension, and thereby allows the formation of a fluid uptake area at the inner side of the exterior wall of the pipette tip extension also when a pipette tip is inserted. A distance element thus prevents that an inserted pipette tip fully abuts the inner side of the exterior wall of the pipette tip extension. The distance element therefore function as spacer which allows the fluid uptake area being further limited by a pipette tip when such a pipette tip is inserted into the pipette tip extension.

One distance element is sufficient to space an inserted pipette tip apart from the inner side of the exterior wall for forming a channel between the outer side of the inserted pipette tip and the inner side of the pipette tip extension. This channel may take up a fluid which is to be moved between the pipette tip and the pipette tip extension. A distance element according to the invention may provide a seat for a pipette tip in which the pipette tip does not contact the inner side of the exterior wall.

The distance element is in addition configured to provide a connection with an inserted pipette tip which allows the pipette tip extension being moved by moving the inserted pipette tip, for example under the control of a liquid handling workstation. The connection may for example be a friction fit, which is a force fit connection between the pipette tip extension and an inserted pipette tip, though a form-fit connection may also be possible.

Neither when using one nor when using more distance elements, a distance element does not extend circumferentially along the inner side of the exterior wall, so that the pipette tip extension or the fluid uptake area, respectively, is never closed towards the reception aperture. The reception aperture at the proximal end of the pipette tip extension is during use at least partially open and thus not completely closed, e.g. by a cover, a seal, the pipette tip it is attached to, or a combination thereof. By remaining open to the surrounding atmosphere, sufficient pressure equalization is ensured when a liquid is dispensed from a pipette tip into the fluid uptake area of an attached pipette tip extension.

The distance elements subdivide the inner cavity into a fluid uptake area and a pipette tip hosting area, which correspond to the later position of an inserted pipette tip. The configuration of the distance element and the number used may define the volume of liquid which may be taken up in the fluid uptake area. The fluid uptake area may for example be restricted by the outer wall of an inserted pipette tip and the inner wall of the pipette tip extension, though when the pipette tip extension is configured for treating larger area of interest, additional structures may be used for further restricting the fluid uptake area, as discussed later. Depending on such additional structures, the fluid uptake area may for example extend up to the reception aperture, or may extend simply towards the reception aperture.

In the context of the present invention, a fluid may be any type of liquid or gas, for example a liquid sample, a reagent, a buffer, etc. The fluid may also be a mixture of different liquids (e.g. an emulsion), a mixture of different gases, a mixture of a liquid and a gas (i.e. an aerosol), or a mixture of a liquid and a solid dispensed in said liquid (i.e. a suspension). Solid particles may for example be abrasive particles such a sand, or may be magnetic beads. The liquid may also be a solvent for molecules of interest.

The pipette tip extension is attached to a pipette tip in such a manner that the distal end of both the pipette tip extension and the pipette tip point in the essentially same direction. The same applies to the proximal ends of the pipette tip extension and the pipette tip.

The constriction element functions as a stopper element which is able to restrict the insertion depth of a pipette tip when the pipette tip extension is attached to said pipette tip. The constriction element shall in particular prevent that the distal end of a pipette tip, which is inserted, is positioned flush with the distal end of the pipette tip extension or even protrudes from of the dispense aperture of the pipette tip extension. By restricting the insertion of a pipette tip to a defined depth within the inner cavity of the pipette tip extension according to the invention, a gap, or a corresponding gap height, is defined which is generated when a pipette tip is inserted until the insertion is stopped at the constriction element.

In addition to the stop function, the constriction element is further configured to allow a fluid passing the constriction element when the fluid shall be moved between an inserted pipette tip and the fluid uptake area of the pipette tip extension. This fluid-permeability is achieved be the sieve-like structure of the constriction element. A sieve-like structure in the context of the present invention is understood as a structure having passages for a fluid, while holding back an inserted pipette tip. The sieve-like structure may allow in particular a fluid passaging between an inserted pipette tip and the gap of the pipette tip extension and may further allow a fluid passaging between the gap and the uptake area of the pipette tip extension. The fluid passage may be provided for example by pores or through holes or openings in a structure being otherwise able to hold back an inserted pipette tip from being further introduced into the pipette tip extension. Such a structure may for example be coarse or fine, and for example be a braid, a grid, or a perforated plate.

In the context of the present invention, the distance elements may function here for positioning an inserted pipette within the inner cavity and in relation to the inner side of the exterior wall, thereby allowing that the fluid uptake area is formed without restricting a fluid passage between an inserted pipette tip and the gap. The distance element may additionally serve to hold the position of an inserted pipette tip with respect to the inner side of the exterior wall to a certain extend by providing a certain lateral stability, without hindering a fluid being moved out of an inserted pipette tip towards the gap. The constriction element then may in addition ensure that an inserted pipette tip is hold at a defined height within the cavity and thereby ensuring that a gap is formed which further serves as a fluid passage. The constriction element may be an additional safeguard to ensure a repeatable gap height. The sieve-like structure may then allow a liquid being moved between an inserted pipette tip, the gap, and the fluid uptake area.

The gap height, which is e.g. generated when a pipette tip is inserted under a controlled manner with the aid of the constriction element, may for example be 0.1 mm to 1 mm.

In the context of the present invention, the gap describes the space between the distal end of the pipette tip extension and the distal end of a pipette tip, which is generated when the pipette tip extension and the pipette tip are assembled. The gap serves as a fluid connection between the inner cavity of the pipette tip and the fluid uptake area of the pipette tip extension and is also a part of the fluid uptake area. Upon placing the distal end of the pipette tip extension onto a surface, such as a surface of a microscope slide with a tissue section, the gap may be restricted towards the distal end of the pipette tip extension by closing the dispense aperture of the extension with said surface. Is the dispense aperture of the pipette tip extension closed, a fluid flow between the inner cavities of the pipette tip and the pipette tip extension is possible. Depending on the inner geometry at the distal end of the pipette tip, the volume of liquid and the flow rate can be influenced. A higher flow rate would in particular maximize the shear stress of the liquid on the tissue, while the flow must be sufficient to ensure that the liquid may contact the complete area on the surface of the addressed tissue covered by the dispense aperture of the pipette tip extension.

The use of a constriction element has the advantage that the insertion depth of a pipette tip within the pipette tip extension is controllable by a physical structure, which may be provided in the pipette tip extension. The constriction element according to the invention defines an end stop end for a pipette tip. The end stop provides the stopper function, in that it is for example abuttable by the distal end of a pipette tip when it is inserted into the pipette tip extension.

The control of the insertion depth may ensure that the pipette tip leaves a gap below its distal end when positioned within the pipette tip extension. The gap allows, when the dispense aperture of the pipette tip extension is closed e.g. by a prepared sample or by a part of the surface the sample is provided on, that the liquid may be transported from the pipette tip over the gap and the sample into the fluid uptake area of the pipette tip extension. The gap functions as a fluid connection between the inner cavity of the pipette tip and the fluid uptake area of the pipette tip extension. In an advantageous embodiment, the distance element(s) is or are arranged in such a manner that a continuous fluid uptake area is generated along the inner side of the pipette tip extension, which means that preferably no isolated channels are generated but that each generated fluid uptake area is in fluid connection with the other fluid uptake areas. This ensures that the liquid which is moved between the pipette tip and the pipette tip extension and over the sample remains homogeneously.

In an embodiment of the invention, which may be combined with any other of the embodiments which were or will be mentioned, unless there is a contradiction, the distance element is a sleeve which is configured to receive and circumferentially enclose a distal end of a pipette tip within the inner cavity, without restricting a fluid passage between an inserted pipette tip and the gap.

In this embodiment, the shape and dimension of the sleeve may be adapted to the shape and dimensions of a distal end of a pipette tip which shall be inserted into the sleeve. For example, the sleeve may taper from a proximal to distal direction when the distal end of a pipette tip does so. A sleeve in the context of the present invention is a tubular, elongated envelope or circumferential wall into which at least a distal end of a pipette tip may be inserted. The inner side of the sleeve is thereby contacted by the outer side of the pipette tip. When a pipette tip is inserted into the sleeve, the pipette tip is aligned within the inner cavity of the pipette tip extension. The position and alignment of the pipette tip within the inner cavity of the pipette tip extension may be influenced by the configuration of the shape and dimension of the sleeve as well as by the position of the sleeve within the inner cavity of the pipette tip extension.

In an embodiment of the invention, which may be combined with any other of the embodiments which were or will be mentioned, unless there is a contradiction, the sleeve is open at the distal end for allowing a liquid being dispensed from an inserted pipette tip into the gap.

The configuration of the sleeve may have an influence onto the configuration of the constriction element. For example, it is possible that the sleeve is configured to have the distal end of the sleeve being flush with the distal end of a pipette tip which is inserted into the sleeve. In this case it may be an advantage to arrange the constriction element in an immediate operative connection to the distal end of the sleeve, so that the stop function of the end stop may exercise for example its function upon the distal end of the pipette tip.

It may also be possible that the sleeve is configured to have the distal end of the sleeve being offset from the distal end of a pipette tip which is inserted into the sleeve, the offset being along the medial axis of the pipette tip extension. If for example the distal end of the pipette tip projects out of the distal end of the sleeve, the constriction element may be spaced apart from the distal end of the sleeve, though for example in functional connection with the distal end of the pipette tip. If for example the distal end of the pipette tip is positioned within the sleeve, the constriction element may for example be configured to protrude inwardly into the sleeve.

In an embodiment of the invention, which may be combined with any other of the embodiments which were or will be mentioned, unless there is a contradiction, the sleeve is connected to the inner side of the exterior wall by one or more distance bars which are arranged at the inner side of the pipette tip extension.

By use of such distance bars, for example the position of the sleeve within the inner cavity may be controlled. By use of bar like elements, it may for example also be ensured that the fluid uptake area is in fluid connection with the surrounding atmosphere at the reception aperture.

In an embodiment of the invention, which may be combined with any other of the embodiments which were or will be mentioned, unless there is a contradiction, the pipette tip extension comprises at least two, preferably at least three additional distance elements, each distance element being configured as a distance bar which extends along a direction from the proximal end towards the distal end of the pipette tip extension, wherein the form of the distance bars and the position of the distance bars are configured such that each distance bar can be abutted by an outer side of a pipette tip when inserted into the pipette tip extension.

In this configuration, the additional distance elements may supplement the function of the sleeve of position a pipette tip. Such additional distance elements may have a configuration in which they protrude into the inner cavity. They may here have a surface which is directed towards a medial axis of the pipette tip extension, which can be abutted by an outer side of a pipette tip when the pipette tip extension is attached to the pipette tip. This configuration may be particularly useful if the pipette tip extension is an elongated body (elongated along the medial axis), with a respective elongated inner cavity. In such an elongated embodiment, the additional distance elements may provide a further stability, as an inserted pipette tip is not only positioned by the sleeve but in addition in a more proximal region by such additional distance bars.

An additional distance element may for example be an inner bar, but also other types of protrusions at the inner side of the exterior wall of the pipette tip extension are possible, such as noses, as well as varying forms such as straight or snake- or wave-like bars. Combinations of protrusions of different types or forms are possible. Irregular forms are particularly suitable for providing an additional mixing effect to the liquid which is introduced into the pipette tip extension. It might be possible that only one additional distance element is provided at the inner side of the exterior wall, as long as it still allows the formation of a fluid uptake area in the inner cavity of the pipette tip extension. By coordinating the depth of each additional distance element it may for example be possible to influence the position of an inserted pipette tip within a pipette tip extension in particular in the proximal region of the pipette tip extension, for example in a centric or acentric manner.

In an embodiment of the invention, which may be combined with any other of the embodiments which were or will be mentioned, unless there is a contradiction, the sleeve is arranged centrally within the inner cavity, extending along a medial axis of the pipette tip extension.

A central position may be desired for stability reasons, or so simplify for example the manufacturing process. A central position may be achieved by using additional distance bars for connecting and positioning the sleeve within the desired position in the inner cavity of the pipette tip extension.

It is alternatively possible for example, if the sleeve shall not be connected to the exterior wall by additional distance elements, to connect the sleeve itself to the inner side of the exterior wall. In this situation, also the distal end of the pipette tip would be positioned acentric, i.e. off-center, within the inner cavity of the pipette tip extension.

In an embodiment of the invention, which may be combined with any other of the embodiments which were or will be mentioned, unless there is a contradiction, the sleeve is adapted to the shape of a distal end of a pipette tip.

The adaptation of the sleeve shape, in particular of the inner sleeve shape, to the shape of the distal end of a pipette tip which shall be inserted may provide an increase in the position precision and the stability of the inserted pipette tip within the pipette tip extension.

In an embodiment of the invention, which may be combined with any other of the embodiments which were or will be mentioned, unless there is a contradiction, the constriction element comprises a guiding plate which defines or is connected to the end stop, the guiding plate being arranged close to the distal end of the pipette tip extension but offset from the distal end of the pipette tip extension towards the proximal end, and delimits together with the inner side of the exterior wall the gap at the distal end of the pipette tip extension.

In this embodiment, the length of the offset (along the medial axis) determines the gap height. The guiding plate may be arranged between the distance element, in particular when it is configured as a sleeve, and the distal end of the pipette tip extension, with an offset to the distal end of the pipette tip extension. The guiding plate may guide a liquid which is dispensed by pipette tip through the gap and into the fluid uptake area. The guiding plate may for this have a planar extension, having a disc-like shape, for example, for guiding a liquid. Thus, the surface size of a guiding plate which faces to the gap may be adapted to the lateral extension of the gap, while leaving a fluid passage for example at the outer rim of the guiding plate which faces the inner side of the exterior wall. However, the guiding plate may rather have a more ring-like structure which is for example either directly abuttable by a distal end of an inserted pipette tip, or which is connected to a respective end stop.

A guiding plate may have a shape selected from a ring-shape, a funnel-shape, a plate or disc-like shape, and a shim-like shape. In a plate-like or disc-like shape, the guiding plate preferably comprises a connection channel for providing a fluid passage from an inserted pipette tip into the gap.

A guiding plate may be desired when for example larger amounts of liquids shall be used, for example in the treatment of larger AOI's, and when the size or lateral extension of the dispense aperture is adapted accordingly. Longer distances of a fluid to move from an inserted pipette tip through the gap and into the fluid uptake area typically reduce the flow velocity. This may in turn reduce the effectiveness of the fluid treatment of the sample. By use of a guiding plate, the gap height may be controlled to allow a continuous fluid flow from the pipette tip through the gap into the fluid uptake area of a desired and sufficiently high flow velocity. The use of a guiding plate may also provide a higher stability for a pipette tip extension which is for example adapted to the treatment of a larger AOI.

The guiding plate defines the end stop for example in the case that the guiding plate itself is the end stop. The guiding plate may be arranged below the distance element, in particular below the sleeve, to be abuttable by the distal end of a pipette tip when the pipette tip is inserted into the pipette tip extension. The guiding plate here comprises advantageously a continuous opening which provides a fluid connection from the pipette tip through the guiding plate into the gap.

The guiding plate is connected to the end stop for example in the case where the end stop is a separate structure. Also in this case, the guiding plate comprises advantageously a continuous opening which provides a fluid connection from the pipette tip through the guiding plate into the gap. The end stop may for example be connected to the guiding plate in a way in which a fluid connection from the pipette tip through the guiding plate into the gap is ensured.

In an embodiment of the invention, which may be combined with any other of the embodiments which were or will be mentioned, unless there is a contradiction, the guiding plate extends perpendicular to the medial axis of the pipette tip extension and is connected to the inner side of the exterior wall by one or more support bars, the support bars providing one or more passages for fluidly connecting the gap (17) with the fluid uptake area.

The guiding plate may not necessarily have a perpendicular extension but may be arranged at a different angle, or the guiding plate may have for example a shape which deviates from a plate-like shape, for example a funnel-like shape or others. By the configuration of the shape and dimension of the guiding plate, the flow velocity of a liquid which is used with the pipette tip extension in the treatment of a sample may be influenced.

A support bar may for example be connected to the inner side of the exterior wall and extend laterally with respect to the medial axis of the pipette tip extension. A support bar may alternatively be a protrusion of the exterior wall which extends towards the medial axis of the pipette tip extension. Support bars which connect a guiding plate to the inner side of the exterior wall allow a continuous fluid passage from the gap into the fluid uptake area. The bars may have a more lath-like configuration with a lateral extension, as long as a fluid connection is allowed.

The use of bars to connect the end stop and/or a guiding plate with the exterior wall rather allows the connection being fluid permeable, so that a continuous fluid flow is allowed from an inserted pipette tip through the gap into the fluid uptake area. The use of two or more, or a multitude of bars for example therefore may establish the sieve-like structure of the constriction element.

The one or more support bars may be arranged at the distal end region of the pipette tip extension, but with an offset to the distal end. The one or more support bars may in this case be arranged on the same level as guiding plate. It may alternatively be possible that the one or more support bars are arranged flush with the distal end of the pipette tip extension, and extend inwardly to the guiding plate, which is arranged with an offset of the distal end of the pipette tip extension. The support bars may be arranged in a regular pattern, for example a star-like pattern within the inner cavity of the pipette tip extension, or may for a sieve-like structure of an irregular pattern. The configuration of the one or more support bars may depend on the desired design of the gap at the distal end of the pipette tip extension, or for example on the design of the guiding plate. The support bars may merge with a guiding plate, of they may be configured to carry a guiding plate.

In an embodiment of the invention, which may be combined with any other of the embodiments which were or will be mentioned, unless there is a contradiction, the guiding plate comprises a connection channel which provides a fluid connection between an inserted pipette tip and the gap.

The connection channel is a continuous through opening within the guiding plate which provides a fluid connection from the pipette tip through the guiding plate into the gap. A liquid which is dispensed from an inserted pipette tip may pass the guiding plate and enter the gap by the connection channel. The connection channel may also provide a sieve-like function in that it allows a fluid passage from an inserted pipette tip into the gap.

The connection channel may be arranged on the medial axis of the pipette tip extension, so that the medial axis extends through the connection channel. In this configuration, the pipette tip extension is configured in an axial symmetry, which may be an advantage for the manufacturing process, e.g. in injection molding. However, the connection channel may alternatively be arranged offset of the medial axis of the pipette tip extension, for example in cases where the distance element is configured to position a pipette tip offset of the medial axis, to allow a continuous fluid flow from an inserted pipette tip into the gap. In a further alternative, connection channel and the distance element are configured in a manner in which the distal end of an inserted pipette tip is positioned aside the connection channel. In this case, an additional fluid connector may be used for bridging the offset and for providing the continuous fluid flow from an inserted pipette tip through the guiding plate into the gap.

In an embodiment of the invention, which may be combined with any other of the embodiments which were or will be mentioned, unless there is a contradiction, the end stop is configured as an elongated, tubular hollow cylinder which is functionally connected to the connection channel.

The end stop may be formed by at least one of the following:
- a hollow cylinder which is functionally connected to the connection channel and to the distal end of the sleeve,
- the guiding plate,
- one or more support bars which extend from the exterior wall forming a ring-shaped stop which is connected to the connection channel of a guiding plate,
- a part of a complementary form-fit connection between a pipette tip extension inserted into the sleeve and the end stop, for example a rib or groove of a rip-groove-connection.

The hollow cylinder may serve not only as a stop element but in addition as a fluid connector between the distal end of an inserted pipette tip and the connection channel in the guiding plate. The length of the cylinder may therefore be adapted to the distance between the distal end of an inserted pipette tip and a guiding plate and/or one or more of support bars (which may correspond to the distance between the distal end of the sleeve). The cylinder may therefore be configured as an elongated cylinder, or more flatly as a washer-like (or shim-like) structure.

In a case where the guiding plate forms the end stop, it may be desired that in particular the region around the connection channel serves as a stop. This may for example be achieved in that the diameter of the connection channel is slightly smaller than the diameter of the distal end of the sleeve and/or the diameter of an inserted pipette tip. In this way, the region around the connection channel forms a shoulder which is abutted by the distal end of a pipette tip when it is inserted into the pipette tip extension, so that the insertion depth is limited by the guiding plate.

In the case where the end stop if formed by one or more support bars which extend from the exterior wall forming a ring-shaped stop which is connected to the connection channel of a guiding plate, the ring-shaped stop is abutted by the distal end of a pipette tip upon insertion. The ring-shaped stop may also be considered as a guiding plate, however, as explained before.

In the case where the end stop is formed by a part of a complementary form-fit connection between a pipette tip extension inserted into the sleeve and the end stop, for example a rib or groove of a rib-groove-connection, it may be desired that the sleeve is directly connected to the connection channel in a guiding plate, for example.

In an embodiment of the invention, which may be combined with any other of the embodiments which were or will be mentioned, unless there is a contradiction, the guiding plate comprises a groove which faces the gap at the distal end of the pipette tip extension.

The groove has been shown to reduce the dead volume of liquid when a liquid is aspirated from the fluid uptake area through the gap into an inserted pipette tip. It is currently though that this effect may base on a capillary effect. Dead volume in the present context is understood as being a volume of liquid which remains within the gap for example at the guiding plate although the liquid should have been aspirated into an inserted pipette tip extension.

In an embodiment of the invention, which may be combined with any other of the embodiments which were or will be mentioned, unless there is a contradiction, the groove extends at least in the proximity of the connection channel.

It may be possible that the groove extends circumferentially around the connection channel. It may further be possible that the groove is positioned closer to the connection channel than to the exterior wall or to the outer rim of the guiding plate, which faces to the inner side of the exterior wall.

In an embodiment of the invention, which may be combined with any other of the embodiments which were or will be mentioned, unless there is a contradiction, the distance element is configured as a sleeve for receiving and circumferentially enclosing a distal end of a pipette tip, the sleeve being open at the distal end for allowing a liquid being dispensed from an inserted pipette tip into the gap, and
wherein the end stop is configured as an elongated, tubular hollow cylinder which provides a passage for fluidly connecting an inserted pipette tip with the gap,
wherein the sleeve and the end stop are fluidly connected to provide the fluid connection between the pipette tip and the gap.

In a preferred embodiment of the invention, which may be combined with any other of the embodiments which were or will be mentioned, unless there is a contradiction, the sleeve is liquid-tight connected to the end stop to avoid fluid shortcutting between the pipette tip and the fluid uptake area. Therefore, the sleeve can be produced to encompass respective pipette tips closely, e.g., in a friction or form fit manner. For that, the sleeve and the end stop can be formed as a cup like unit with a central dispense aperture which may have a cylindrical continuation of the connection channel towards the gap.

In an embodiment of the invention, which may be combined with any other of the embodiments which were or will be mentioned, unless there is a contradiction, the constriction element comprises a guiding plate which comprises the end stop, the guiding plate being arranged close to the distal end of the pipette tip extension but offset from the distal end of the pipette tip extension towards the proximal end, and delimits together with the inner side of the exterior wall the gap within the inner cavity of the pipette tip extension, and
wherein the pipette tip extension further comprises an inner wall arranged between the sleeve and the exterior wall, wherein the inner wall extends circumferentially around the sleeve and along a direction from the distal end to the proximal end of the pipette tip extension, thereby restricting the fluid uptake area towards within the inner cavity, the inner wall being connected to the exterior wall by the distance bars, and being connected to the guiding plate at the side which faces towards the inner cavity.

In this embodiment, the inner wall encloses the sleeve, and further defined the limitation of the fluid uptake area opposite to the inner side of the exterior wall. By adapting the distance between the inner side of the exterior wall and the inner wall, the size of the fluid uptake area may be controlled independently from the dimension and configuration of the pipette tip which shall be inserted into the pipette tip extension.

The inner wall may extend parallel to the medial axis, though other orientations may be possible, for example to influence the configuration of the fluid uptake area. The inner wall may be connected to the sleeve by connection elements.

In an embodiment of the invention, which may be combined with any other of the embodiments which were or will be mentioned, unless there is a contradiction, the shape and dimension of the dispense aperture is adapted to the size of a sample to be treated (area of interest).

The pipette tip extension of the present invention is particularly useful when an area of interest of a sample shall be treated which has a relatively large size.

In an embodiment of the invention, which may be combined with any other of the embodiments which were or will be mentioned, unless there is a contradiction, the dispense aperture may have a circular form or a circular cross section, respectively, viewed orthogonally to the medial axis of the pipette tip. The dispense aperture is configured to release and receive volumes of a fluid.

In an embodiment of the invention, which may be combined with any other of the embodiments which were or will be mentioned, unless there is a contradiction, the one or more support bars, e.g. a support bar of an off-set rib type, connecting the guiding plate to the inner side of the exterior wall, or a connection element connecting the inner wall to the sleeve have a cut out section provided to extend the height (h) of the gap immediately adjacent to the inner side of the exterior wall to provide a quick and equal liquid transfer within the gap, and between the gap and the fluid uptake area during dispense and aspiration operations of the pipette.

The pipette tip extension according to any of the preceding embodiments can be produced by injection molding of the respective polypropylene composition. Thereby the parting line of at least two mold parts used to produce the pipette tip extension can be shifted into the dispense aperture or the connection channel, so that no press burr or flashes are formed in the transition area from the dispense aperture or the connection channel and the gap or at the surface of the end stop. Thereby flow disturbances can be avoided in the sample are and a good sealing of the pipette tip with the end stop can be provided.

In an embodiment of the invention, which may be combined with any other of the embodiments which were or will be mentioned, unless there is a contradiction, the constriction element is formed by at least one of the following:
- a stop surface or a part thereof of the one or more distance elements which is directed towards a medial axis of the pipette tip extension, and/or
- a distal end of one or more distance elements, each distal end being an additional protrusion of the distance element towards a medial axis of the pipette tip extension and provides an abutment or an end stop for the distal end of a pipette tip, to position the distal end of the pipette tip at an offset to the distal end of the pipette tip extension, the offset corresponding to the gap height, and/or
- an inner side of the exterior wall which protruded in the distal region of the pipette tip extension towards the medial axis of the pipette tip extension and which provides an abutment or an end stop for the distal end of a pipette tip, and/or
- one or more support bars which extend laterally with respect to the medial axis of the pipette tip extension.

The features of the above-mentioned embodiments of the pipette tip extension can be used in any combination, unless they contradict each other.

Another aspect of the invention concerns an assembly comprising a pipette tip for aspirating and/or dispensing a liquid, and a pipette tip extension attached to the pipette tip. The pipette tip extension comprises a proximal end, a distal end, and an exterior wall extending between the proximal end and the distal end. The exterior wall has an outer side and an inner side and forms at the proximal end a reception aperture for inserting the pipette tip, and forms at the distal end a dispense aperture. The pipette tip extension further comprises an inner cavity enclosed by the inner side of the exterior wall, and a distance element connected to the inner side of the exterior wall, for positioning the pipette tip within the inner cavity and for establishing a fluid uptake area adjacent to the inner side of the exterior wall. The fluid uptake area extends from the dispense aperture towards the reception aperture and is in fluid connection with the surrounding atmosphere at the reception aperture. The pipette tip extension further comprises a constriction element which is connected to the inner side of the exterior wall of the pipette tip extension for controlling an insertion depth of the pipette tip within the pipette tip extension. The constriction element defines a gap with a gap height between a distal end of the inserted pipette tip and the distal end of the pipette tip extension. The constriction element comprises an end stop for the pipette tip and is configured as a fluid-permeable sieve-like structure.

The pipette tip extension may comprise one or more features as described above in the context of the single pipette tip extension. These features and/or different embodiments can be used in any combination unless they contradict each other. The definitions given to the pipette tip extension above apply also to the pipette tip extension being part of the assembly.

Another aspect of the invention concerns an injection molding method to produce a pipette tip extension according to any of the preceding claims, comprising:
- providing a two-parts mold having a first parting plane above the distal end of the pipette tip extension and within the dispense aperture (7) or the connection channel (16), the mold having a further parting plane in the region of or at the proximal end of the pipette tip extension;
- providing a polypropylene composition comprising at least 85% of a heterophasic polypropylene copolymer (h-PP), the latter comprising a propylene random copolymer matrix phase (r-PPM) and an elastomeric propylene copolymer (e-PP) dispersed in the matrix, and optionally polyethylene (PE) dispersed in the matrix, and having:
   o a melting temperature between 130-160°C, e.g., from 135-150°C, especially from 138-148°C, e.g., 141±1°C and
   o a melt flow (MFR, 230°C/2.16kg) according to ISO 1133 from 0.5-6.0 g/10 min, e.g., from 1.0-5.0 g/10 min, more preferably from 1.5-4.0 g/10 min, especially of about 3.9±0.1 g/10min.
- injection molding the plastic material into the mold.

Further details of the composition as disclosed in context with the description of the PP composition of the pipette tip extension above can be applied. The process could be applied at room temperature, injection pressures between 10 to 35 MPa have been applied depending on the overall dimensions of the pipette tip extension. As an example, for small pipette tip extensions high pressures from 30-35 MPa have been applied, whereas for large pipette tip extensions lower pressures from 10-15 MPa have been applied.

A pipette tip extension made from a material having a hardness as mentioned above could be surprisingly proved to fulfill best the most decisive material relevant functions of a pipette tip extension also with different geometries as described above. The most important and critical functions to be provided by the pipette tip extension geometry and the respective material it is made of have proved to be the following ones, beginning with the most difficult feature first:
- provide a fluid tight sealing function when the distal end of the pipette tip extension is set on the surface of a sample slide and a fluid is dispensed from or aspirated into the pipette tip;
- provide an adapted elastic force and a surface friction sufficiently high to achieve a slight friction fit connection between the tip extension and the inserted pipette tip;
- provide a mechanical stiffness high enough to maintain the tip extensions geometry (e.g., gap height, fluid uptake area, connection channel) when pressed on the slide by the pipette tip;
- provide a fluid tight sealing function when the pipette tip is set in the pipette tip extension to avoid shortcutting of the fluid path, directly from the outlet opening of the pipette tip into the fluid uptake area, e.g., when the pipette tip is set on a stop surface of a distance element or an end stop which can be formed also by a constriction element;
- provide chemical inertness of the pipette tip extension against the analyte and the sample which may be dissolved or brought into suspension, which requires that the material used for the pipette tip extension has a low level of leachables and extractables;
- providing a surface having low binding properties for DNA/RNA, e.g., a medical grade PP;
- avoid stickiness of the surface to prevent dust or particles, or parts of the sample, e.g., parts of the DNA/RNA stick to surface;
- having a smooth surface at least in the sealing section and the stop surface and/or within the sleeve where the pipette tip touches in a sealing manner the pipette tip extension, respectively providing respective surfaces during injection molding.

Surprisingly it could be shown that a respective polypropylene composition can be tailored to provide as mentioned mechanical features but also to give respective surface friction, without being sticky, to hold the pipette tip extension on the pipette tip and transfer the extension to or from the sample slide, and at the same time allow an easy automatic discharging of the tip extension from the pipette tip. This could be combined best with pipette tip extension of certain geometries as mentioned above and will be explained in detail at the hand of examples and figures.

It should be mentioned that shortcutting, could be also improved by constructional measures, e.g., by providing a sleeve which is liquid-tight connected to an end stop and can be cup like as mentioned above explained at the hand of the figures in detail later. With a combination of a respective h-PP material and a respective liquid-tight connected sleeve the best results with reference to shortcutting could be achieved. Additional surprisingly improvements with reference to the flow characteristic could be achieved by shifting the parting line into the connection channel and/or to provide a cut out section as mentioned above. These measures could help to dissolve and/or solubilize sample material more uniformly from the surface of the test slide, when applied alone or in combination.

### BRIEF DESCRIPTION OF THE DRAWINGS

Embodiments of the state of the art and the current invention are described in more detail in the following with reference to the figures (Fig.). As parts from WO2020/13232394 represent an integral part of the present invention figures 1A to 7 are overtaken from there to explain respective mechanical and geometrical features which are important to understand also for the present invention. The figures following thereafter represent certain further developments and experiments and further features of improvement (figures x-y).
- Fig. 1A: a schematic perspective side view of a pipette tip extension in an exemplary embodiment,
- Fig. 1B: a schematic top view into a pipette tip extension of Fig. 1A,
- Fig. 1C: a schematic sectional drawing of the pipette tip extension of Fig. 1A based on intersection plane C-C,
- Fig. 1D: a schematic sectional drawing of the pipette tip extension of Fig. 1A based on intersection plane D-D,
- Fig. 2A: a schematic bottom view drawing onto the distal end of a pipette tip extension of Fig. 1A,
- Fig. 2B: a schematic sectional drawing of an exemplary embodiment of the distal end of a pipette tip extension based on intersection plane A-A,
- Fig. 3A: a schematic, perspective drawing onto the distal region of a pipette tip extension in a further embodiment,
- Fig. 3B: a schematic, perspective drawing of a sectional view of the distal region of the pipette tip extension of Fig. 3A,
- Fig. 3C: a schematic, sectional drawing of the pipette tip extension of Fig. 3A with an inserted pipette tip,
- Fig. 4A: a schematic sectional drawing of the distal end of the pipette tip extension of Fig. 3A,
- Fig. 4B: the schematic sectional drawing of Fig. 4A with inserted pipette tip, the pipette tip extension being positioned onto a flat surface,
- Fig. 5A: a schematic perspective drawing of a view onto the distal region of a pipette tip extension in a further embodiment,
- Fig. 5B: a schematic perspective drawing of a view onto the proximal region of the pipette tip extension of Fig. 5A,
- Fig. 6: a schematic perspective sectional drawing of the pipette tip extension of Fig. 5B based on intersection plane A-A,
- Fig. 7: a schematic sectional drawing of the pipette tip extension of Fig. 5B based on intersection plane B-B,
- Fig. 8A-D: a comparative example of a two-part pipette tip extension,
- Fig. 9A-C: a comparative examples of a one-part pipette tip extension,
- Fig. 10A-C: comparative examples of one-part pipette tip extensions,
- Fig. 11A-B: a comparative example of a one-part pipette tip extension,
- Fig. 12A-B: a comparative example of a one-part pipette tip extension,
- Fig. 13A-B: details of the distal end region of one-part pipette tip extensions,
- Fig. 14A-C: a one-part pipette tip extension according to the invention,
- Fig. 15A-C: a one-part pipette tip extension according to the invention
- Fig. 16A-C: a one-part pipette tip extension according to the invention.

### DETAILED DESCRIPTION OF THE FIGURES

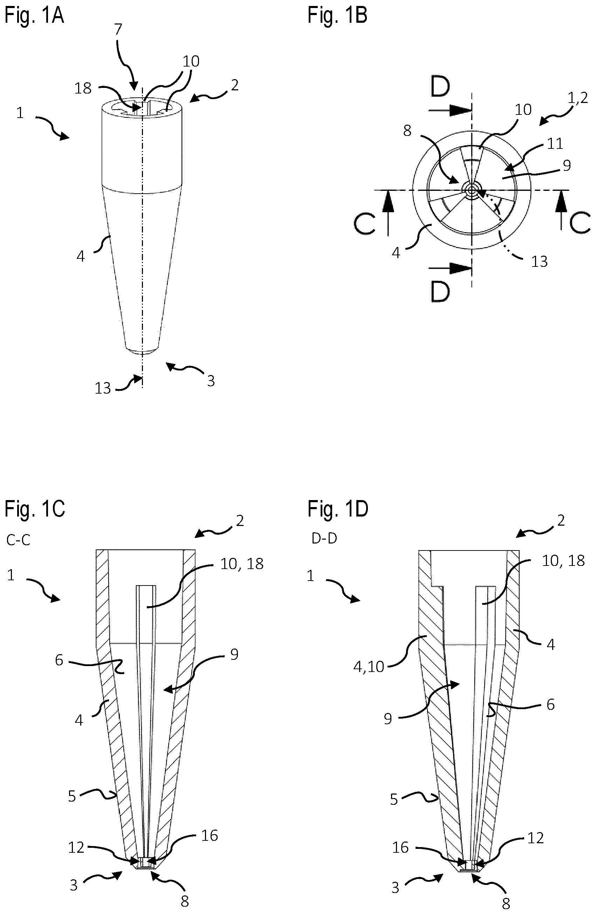

Figs. 1A to 1D show an exemplary embodiment of a pipette tip extension 1 in a perspective drawing. The pipette tip extension 1 here is an elongated, tube-like body with a proximal end 2 and a distal end 3. An exterior wall 4 extends between the proximal end 2 and the distal end 3, and forms at the proximal end 2 a reception aperture 7 and forms at the distal end 3 a dispense aperture 8. The exterior wall 4, comprising an outer side 5 and an inner side 6, encloses an inner cavity 9. The inner cavity 9 is delimited by the inner side 6 of the exterior wall 4. The medial axis 13 is indicated and corresponds here to the longitudinal axis of the pipette tip extension 1.

The pipette tip extension 1 shown here is a rotationally symmetric body. The reception aperture 7 is configured to receive a pipette tip 20 when the pipette tip extension 1 shall be attached to that pipette tip 20. The dimensions, in this case the diameter, of the reception aperture 7 is in particular bigger than the diameter of a pipette tip 20. The dispense aperture 8 is configured being abuttable to a flat surface in a sealing manner. The area of the flat surface, which is below the dispense aperture when a pipette tip extension 1 is sealingly abutted to that surface, and which is as a consequence also below the gap 17, may then be contacted by a liquid which is dispensed from a pipette tip 20 which is inserted into the pipette tip extension 1.

In the present context, the term "a pipette tip extension 1 attachable / attached to a pipette tip 20" describes essentially the same situation as the term "a pipette tip 20 insertable / inserted into a pipette tip extension 1".

The pipette tip extension 1 shown in Fig. 1A comprises a more proximal part which is formed as a cylindrical tube and a more distal part which tapers conically towards the distal end 3. This shape is an example of adapting the shape of the pipette tip extension 1 to the shape of a pipette tip 20 which shall be inserted. An additional measure for adapting the pipette tip extension 1 to the shape of a pipette tip 20 is for example the configuration of the distance elements 10 used. In the embodiment shown if Fig. 1A, three distance elements are used which are configured as elongated bars and which protrude into the inner cavity 9 towards the medial axis 13. Each of the elongated bars comprise a surface 18 which faces towards the medial axis 13, and which is configured as being abuttable at that surface 18 by an outer side of a pipette tip 20. A pipette tip 20 may in this way being positioned within the inner cavity 9.

Fig. 1B shows a schematic top view of the proximal end 2 and into an embodiment of a pipette tip extension 1 which is identical with the embodiment of the pipette tip extension of Fig. 1A, except that the distance elements 10 are not arranged flush with the proximal end 2 but are arranged in an offset to the proximal end 2, as it is shown also in the Figs. 1C and 1D. The surface of the upper edge of the pipette tip extension 1 is visible and is formed in this embodiment by the proximal end of the exterior wall 4. The distance elements 10 are arranged on the inner side 6 of the exterior wall 4 and protrude into the inner cavity 9. The distance elements 10 thereby establish a fluid uptake area 11 which is adjacent to the inner side 6 of the exterior wall 4 and within the inner cavity 9. The dimensions of the distance elements 10 may in this embodiment have a direct influence onto the volume of the fluid uptake area 11.

In Fig. 1B, the course of the intersection planes C-C and D-D are indicated, on which the Figures 1C and 1D are based on.

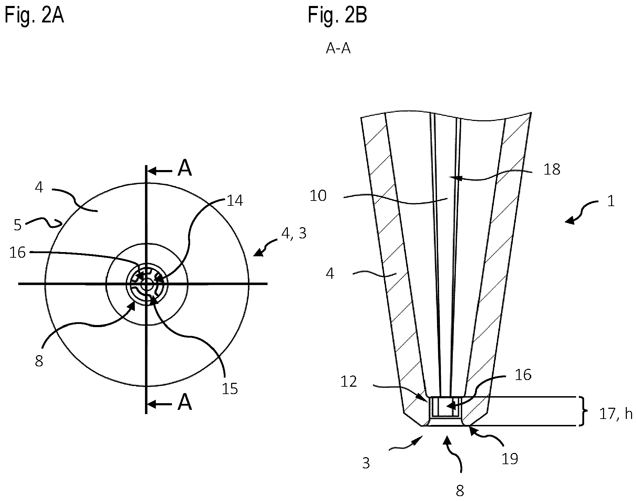

In Fig. 1C, a schematic sectional view of the pipette tip extension 1 according to the intersection plane C-C is shown. The pipette tip extension 1 in an embodiment shown in Fig. 1B can be seen here in a longitudinal section, which particularly allows a view onto one of the distance elements 10 which is configured as an elongated distance bar. In contrast to the embodiment shown in Fig. 1A, the distance elements 10 are arranged with an offset to the proximal end 2, as indicated by respective lines in Fig. 1B. The inner bar extends over almost the entire length of the pipette tip extension 1. The surface 18 which is abuttable by a pipette tip 20 can be seen frontally. Fig. 1C also allows a view onto the distal end 3 of the pipette tip extension, in particular to the dispense aperture 8 and the constriction element 12. The constriction element 12 is arranged with an offset to the dispense aperture 8 and is comprises in this embodiment sieve-like support bars 15 which form together a ring-shaped constriction element, as can be seen in more detail in Fig. 2A. The distance bars for positioning a pipette tip 20 extends up to the constriction element 12. The constriction element 12, in particular the ring-like structure (compare e.g. Fig. 2A) may be directly abutted by a pipette tip 20 when the pipette tip 20 is inserted into the pipette tip extension 1. The ring-like structure here serves as an end stop 23 which restricts the insertion depth of a pipette tip 20, while the ring-like structure itself is fixed within the inner cavity 9 by the support bars 15. As the inner opening of the ring-like structure provides a fluid connection between the inner cavity of an inserted pipette tip 10 and the gap 17, and the interspaces between the support bars 15 provide a fluid connection between the gap 17 and the fluid uptake area 11 of the pipette tip extension 1, the constriction element 12 allows by the sieve-like structure a liquid being dispensed from an inserted pipette tip 20 and moved into the fluid uptake area 11 when the gap 17 is closed by a flat sample or a corresponding flat surface. The gap 17 may be seen in more detail in Fig. 2B, which shows the distal end 3 of the pipette tip extension 1 shown in Fig. 1C in a higher magnification.

In Fig. 1D, a schematic sectional view of the pipette tip extension 1 according to the intersection plane D-D is shown. This longitudinal section allows a frontal view of one of the distance bars being cut (left side) and one of the bars shown in a side view (right side). Visible here is also the connection channel 16, which is provided by the ring-shaped constriction element 12.

In Fig. 2A, a schematic bottom view drawing onto the distal end 3 of a pipette tip extension 1 is shown, the embodiment of the distal end 3 corresponds here to the embodiment of the distal end 3 of a pipette tip extension shown in Fig. 1A or Fig. 1C. In this view, the sieve-like structure of the constriction element 12 at the distal region of the pipette tip extension can be seen. The constriction element 21 comprises here three support bars 15 which are arranged star-like at the distal end 3 of the pipette tip extension 1 and which connect a ring-shaped structure, the guiding plate 14, to the exterior wall 4. The support bars 15 extend laterally with respect to the medial axis of the pipette tip extension 1, and form together with the ring-shaped guiding plate 14 the constriction element 12. The ring-like guiding plate 14 here functions as an end stop, as the guiding plate 14 is abuttable by the distal end of a pipette tip 20 and prevents that the pipette tip 20 is inserted further into the inner cavity 9 of the pipette tip extension 1 (compare to Fig. 2B). By the offset of the constriction element 12 to the sealing surface 19 at the distal end 3 of the pipette tip extension1, as may be seen in Fig. 2B, a gap 17 of a gap height h is formed between the distal end 3 of the pipette tip extension 1 and the distal end of an inserted pipette tip 20 (compare again with Fig. 2B). The sieve-like configuration ensures that a liquid which is dispensed out of an inserted pipette tip 20 may flow into the gap 17, over a surface or a sample thereon, when the pipette tip extension 1 is sealingly positioned on such a surface, and into the fluid uptake area 11 within the inner cavity 9 of the pipette tip extension 1.

In Fig. 2A, the course of the intersection plane A-A is indicated, on which the Fig. 2B is based on.

In Fig. 2B, a schematic sectional drawing of an exemplary embodiment of the distal end of a pipette tip extension based on intersection plane A-A, indicated in Fig. 2A, is shown. In this longitudinal section, the formation of the gap 17 at the distal end of the pipette tip extension 1 and the gap height h can be seen in more detail. The constriction element 12 is abuttable by a distal end of a pipette tip 20, as discussed above. The gap 17 is formed at the distal end 3 of the pipette tip extension 1, when the pipette tip 20 comes to rest within the pipette tip extension 1 with an offset to the distal end 3 of said pipette tip extension 1. When a pipette tip extension 1 is placed for example onto a flat surface comprising a tissue section, the seal section 19 at the distal end 3 of the pipette tip extension 1 provides a seal, and the gap 17 is closed by the flat surface, or a flat sample, e.g. a tissue section placed thereon, respectively. In this situation, a fluid connection between an inserted pipette tip 20 and the fluid uptake area 11 in the inner cavity 9 of the pipette tip extension 1 is provided by the gap 17, while the sieve-like configuration of the constriction element 12 does not hinder a continuous fluid flow although it defines an end stop 23 for the pipette tip 20. As the fluid uptake area 11 is additionally in fluid connection with the surrounding atmosphere at the proximal end 2 of the pipette tip extension 1, it is ensured that a liquid may be moved between the interior of a pipette tip 20 and the fluid uptake area of the pipette tip extension when they are assembled to a functional unit. By means of the gap height h, a flow velocity of the fluid flow may be influenced.

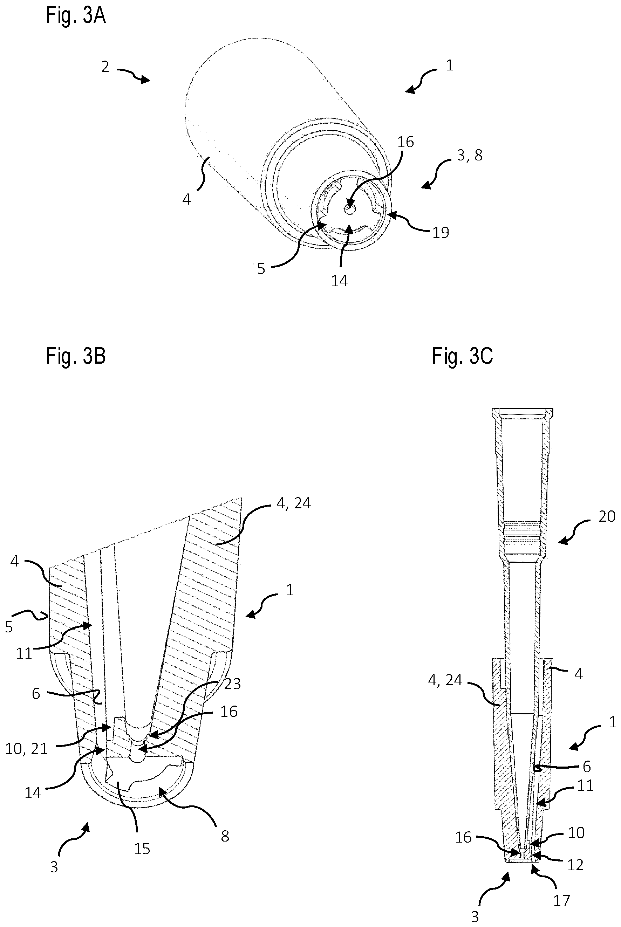

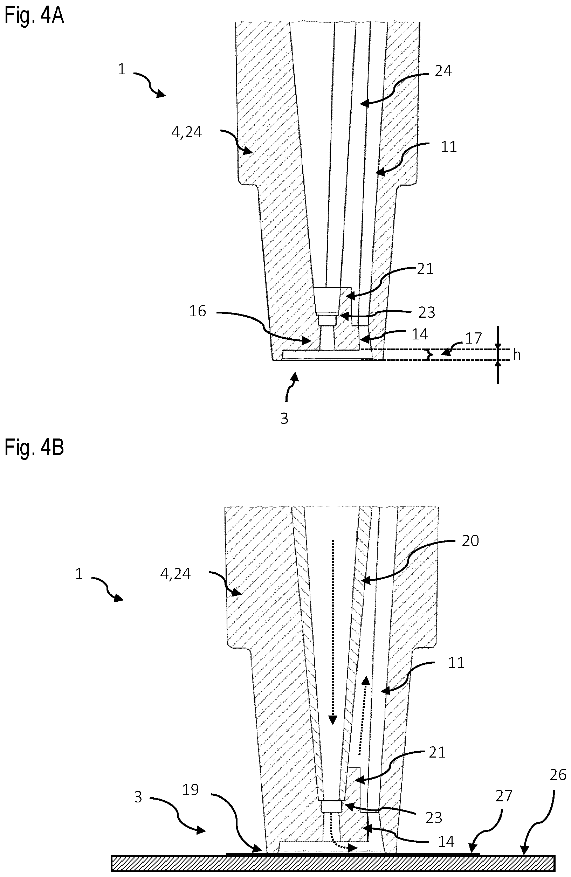

In Fig. 3A, a schematic, perspective drawing of a pipette tip extension 1 in another embodiment is shown as an overview, with a particular view onto the distal end 3 of the pipette tip extension 1 and the sieve-like structure of the constriction element 12. Also in this embodiment, the dispense aperture 8 can be seen with the constriction element 12 being arranged offset of the distal end 3, thereby forming a gap 17 at the distal end 3 of the pipette tip extension 1 (compare e.g., Fig. 4A). The offset of the constriction element 12 from the distal end 3 of the pipette tip extension 1, in particular the offset of the end stop 23 defined by the constriction element 12, directly influences the gap height h of the gap 17, as discussed before.

The constriction element 12 comprises a guiding plate 14, which has in this embodiment more a shim-like shape, and a central connection channel 16 which provides a fluid connection from an inserted pipette tip 20 into the gap 17. The constriction element 12 here also comprises support bars 15 which connect the guiding plate 14 to the inner side 6 of the exterior wall 4. The support bars 15 leave here by the interspaces between the support bars 15 three fluid passages at the inner side of the exterior wall 4, which allow a fluid being moved between the gap 17 and the fluid uptake area 11. The combination of shim-like guiding plate 14, the connection channel 16 and the support bars 15 provide the fluid-permeable sieve-like structure of the constriction element, which allows a fluid passage from an inserted pipette tip 20 through the connection channel 16 into the gap 17 and further from the gap 17 into the fluid uptake area 11 (compare also with Fig. 4B). The more shim-like shape of the guiding plate 14 allows the pipette tip extension 1 being configured for the treatment of medium-sized sample areas, as it provides more lateral stability, for example, compared to the embodiment of the pipette tip extension 1 shown in the Figures 1A to 2B, which are particularly useful in the treatment of small sample areas, as discussed above. The seal section 19 at the distal end 3 which provides a sealing connection to a flat surface, for example comprising a sample, is indicated.

In Fig. 3B, a schematic, perspective drawing of a sectional view of the distal region of the pipette tip extension of Fig. 3A is shown. This longitudinal section allows a perspective side view onto the constriction element 12 and an additional view onto the distance element 10, which is configured here as a sleeve 21 and which joins the constriction element 12 towards the proximal end 2 of the pipette tip extension 1. The sleeve 21 is configured to enclose a distal end of a pipette tip 20 when it is inserted, as may be seen in Fig. 3C and in more detail in Fig. 4B, without hindering a fluid being moved of out or into the inner cavity of such an inserted pipette tip 20. The distal end of the sleeve 21 is directly followed (in this case adjoined) by a thickened guiding plate 14. The guiding plate 14 comprises a connection channel 16 which mouths into the distal end of the sleeve 21. The connection channel 16 has an upper (faced toward the proximal end 2) diameter which is slightly smaller than the diameter of the adjacent distal end of the sleeve, so that a shoulder is formed at the distal end of the sleeve 21.

This shoulder is abutted by a distal end of a pipette tip 20 which is inserted into the pipette tip extension 1 and thus functions as an end stop 23 for controlling an insertion depth of a pipette tip 20. A pipette tip 20 which abuts the shoulder is thereby prevented to further move towards the distal end 3 of the pipette tip extension 1. The connection channel 16 here comprises inner bores of different diameters, which may help in guiding a fluid with a controlled flow velocity from an inserted pipette tip 20 into the gap 17. The sleeve 21, the connection channel 16 and the guiding plate 14 are integrally formed here, and commonly provide a positioning function (by the sleeve 21), a control of the insertion depth of a pipette tip 20 (by the end stop 23) while providing a fluid connection from an inserted pipette tip 20 into the gap 17. The support bars 15, which connect the guiding plate 14 to the inner side 6 of the exterior wall 4 are visible here, as well as the open passages which are left between the support bars 15 at the inner side 6 of the pipette tip extension 1.

In the embodiment shown in Fig. 3B, the distance element 10 comprises in addition to the sleeve 21 distance bars 24 which are arranged at the inner side 6 of the exterior wall 4 and which protrude here with an offset from the proximal end 2 of the pipette tip extension 1 towards the distal end 3 (compare with Fig. 3C). The distance bars 24 may be configured analogously to the distance bars shown in Figs. 1A to 2B. The distance bars 24 are configured here however to join the proximal end of the sleeve 21 (see for example the right side of the exterior wall 4, where a distance bar 24 is shown to be cut and to join the sleeve 21). The distance bars 24 here provide additional support in positioning a pipette tip 20 which is inserted into a pipette tip extension 1. These distance bars 24 are here particularly adapted to the outer shape of the inserted pipette tip 20 (see also Fig. 3C, left side of the longitudinal section), in that the extent, by which each distance bar 24 protrudes towards the medial axis 13 is adapted in such a way that each distance bar is abutted by the distal region of an inserted pipette tip 20.

The distance bar 24 on the right side is shown being cut. The pipette tip extension 1 may comprise three distance bars 24 for example for supporting the positioning of an inserted pipette tip 20, though other numbers may be possible as well, as discussed above.

In Fig. 3C, a schematic overview drawing of a longitudinal section of the pipette tip extension 1 of Fig. 3A with an inserted pipette tip 20 is shown. In this drawing, a distance bar 24 on the left side is shown being cut. The arrangement of distance element 10 (the sleeve 21 in this case), constriction element 12 (guiding plate 14 and support bars 15) and connection channel 16 is shown in an overview, the details may be taken from Fig. 4B. In this longitudinal section, the fluid uptake area 11 at the inner side 6 of the pipette tip extension 1 is visible on the right side of the pipette tip extension, and the gap 17 at the distal end 3 is also visible, though Fig. 4B allows a more detailed view onto the gap 17 when a pipette tip 20 is inserted. The sleeve 21 is shown to hold the distal end of a pipette tip 20. The fluid passage which is allowed by the arrangement and configuration of the distance element 10 and the constriction element 12 can be seen in more detail in the Fig. 4A and in particular in the Fig. 4B, which are higher magnifications of the pipette tip extension 1 of Figs. 3A - 3C.

In Fig. 4A, the distal end 3 of an embodiment of a pipette tip extension 1 shown in Figs. 3A - 3C is presented in more detail in a schematic sectional drawing. In Fig. 4B, the same situation is shown but with a pipette tip 20 being positioned by the sleeve 21 and the distance bars 24, which also establish the fluid uptake area 11. The insertion depth of the pipette tip 20 is controlled by the end stop 23 of the constriction element.

In Fig. 4A, the gap 17 and the corresponding gap height h are shown in more detail. The gap 17 is restricted by the distal, lower surface of the guiding plate 14. As the guiding plate 14 is positioned with an offset from the distal end 3 of the pipette tip extension 1, the gap 17 is formed there. The gap 17 provides a fluid connection of the interior of the disposable pipette tip 20 and the fluid uptake area 11 in the inner cavity 9 of the pipette tip extension 1, wherein a connection channel 16 provides the fluid passage from an inserted pipette tip 20 (see Fig. 4B) to the gap 17, and further wherein the interspace between the outer edge of the guiding plate 14 and the inner side of the exterior wall 4 provides a fluid passage between the gap 17 and the fluid uptake area 11. The use and configuration of the support bars 15 ensure that the fluid connection is not interrupted by the guiding plate 14, and they contribute in the provision of the sieve-like openings, as well as the connection channel 16 arranged in the guiding plate 14. As the fluid uptake area 11 is additionally in fluid connection with the surrounding atmosphere at the proximal end 2 of the pipette tip extension 1, it is ensured that a liquid may be moved between the interior 18 of the pipette tip 20 and the fluid uptake area 11 of the pipette tip extension 1 when they are assembled. The distance bar 24 on the left side is shown to be cut.

In Fig. 4B, the same situation of Fig. 4A is shown but with an inserted pipette tip 20. The distal end of the inserted pipette tip 20 abuts the end stop 23. Furthermore, the functional assembly of pipette tip 20 and pipette tip extension 1 is placed onto a sample 27 on a microscopic slide 26. Exemplarily, the sample is a tissue section on the flat surface of a microscopic slide 26. The pipette tip extension 1 is sealingly attached onto the tissue section, and thereby restricts an area of interest which may be treated by liquid movements between the inserted pipette tip 20 and the pipette tip extension 1. The flow direction of a liquid which is dispensed here is indicated by dotted arrows. The fluid flow is enabled by the configuration and mutual arrangement of the distance element 10, configured here as a sleeve 21, the connection channel 16, the guiding plate 14 and the support bars 15. In particular the connection channel 16 in the guiding plate 14 and the support bars 15 contribute to the fluid-permeable, sieve-like structure of the constriction element

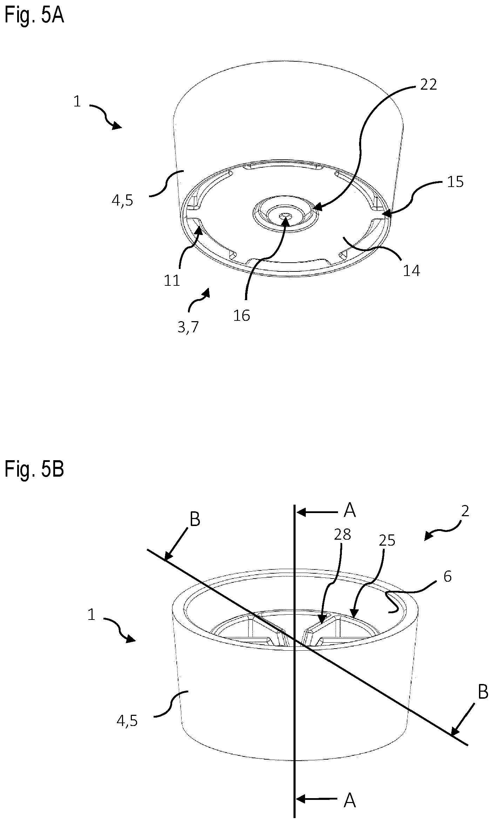

In Fig. 5A, a schematic perspective drawing of a view onto the distal end 3 of a pipette tip extension 1 in a further embodiment is shown. In this embodiment, the pipette tip extension 1 is adapted for treating a larger area of interest. For this, the dispense aperture 7 at the distal end 3 has a larger diameter compared to those of previously discussed embodiments. The guiding plate 14 provides a larger area for being contacted by a liquid which is dispensed through the connection channel 16 into the gap 17, though the gap height h may be the same or of a comparable size than the gap heights h in other embodiments.

Also in this embodiment, the guiding plate 14 is connected to the inner side 6 of the exterior wall 4 by support bars 15 which are configured to provide interspaces between the guiding plate 14 and the inner side of the exterior wall 4. These interspaces serve as fluid passages, so that the fluid-permeability by the sieve-like structure is given, and a fluid may be moved from the gap 17 into the fluid uptake area 11 and back. The guiding plate 14 is here however configured as having an even larger surface area which faces towards the gap 17 and which may be contacted by a fluid during use of the pipette tip extension, as the guiding plate here as a more plate-like shape. As a measure to ensure that as much of a liquid is moved back from the gap 17 into an inserted pipette tip 20 for example during an aspiration step, a groove 22 is provided on the surface of the guiding plate 14 which faces the gap 17. Due to the surface tension the groove 22 holds the liquid during aspiration until the complete circumference of the groove ring is reached. In this way, early air aspiration is avoided and the residual liquid left on the sample minimized. It is believed that the groove "attracts" a liquid, which is present on the guiding plate 14 more closely to the exterior wall 4, towards the connection channel 16.

In Fig. 5B, a schematic perspective drawing of a view onto the proximal region of the pipette tip extension of Fig. 5A is shown. It can be seen here that in contrast to the previously discussed embodiments the inner cavity 9 comprises additional substructures. Here, an additional inner wall 25 is present. The inner wall 25 is connected by distance bars 24 to the inner side 6 of the exterior wall 4 and connected to a distance element 10 which configured as a sleeve 21 by connection elements 28 (see Fig. 5A and 5B). Furthermore, the inner wall 25 is connected with its distal end to the guiding plate 14, so that additional structural stability is provided. By use of such an inner wall 25, the volume of the fluid uptake area 11 may be influenced, as the position of the inner wall 25, in particular the distance to the inner side 6 of the exterior wall 4, may have a direct influence onto the volume of the fluid uptake area 11.

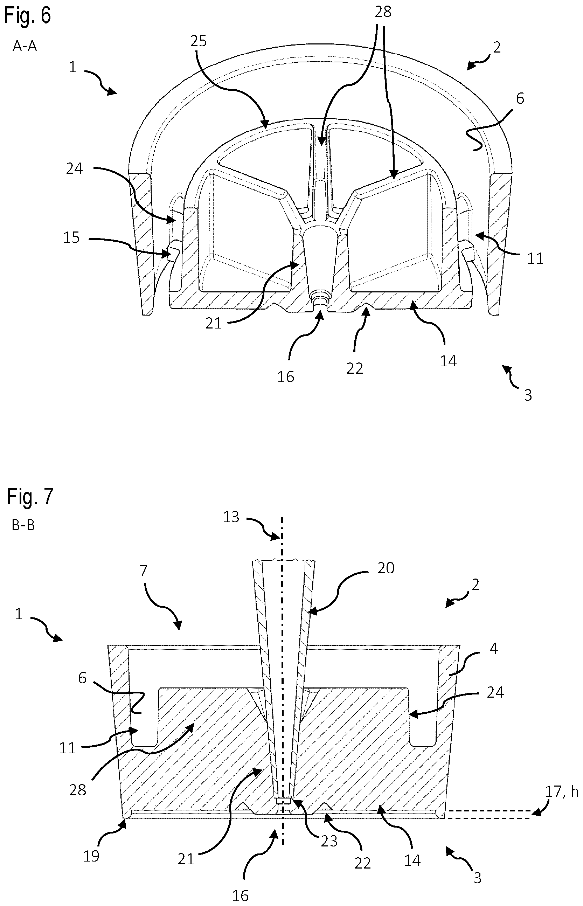

In Fig. 5B, the course of the intersection planes A-A and B-B are indicated, on which the Figures 6 and 7 are based on.

In Fig. 6, a schematic perspective sectional drawing of the pipette tip extension of Fig. 5B based on indicated intersection plane A-A is shown. The additional substructures for allowing the treatment of a larger area of interest while controlling the volume of the fluid uptake area 11 and thereby controlling the volume of required liquid for the treatment of a sample can be seen here in more detail. The sleeve 21 is arranged centrally, and the end stop 23, which is formed by a shoulder here at the immediate distal end of the hollow sleeve 21 and at the beginning of the connection channel 16, controls the insertion depth of a pipette tip 20 within the sleeve 21 and within the pipette tip extension 1 (compare Fig. 7). The sleeve 21, the end stop 23 and the guiding plate are integrally formed here, though they may also be formed separately, and being connected in alternative manners. A fluid from an inserted pipette tip 20 may be moved out of said pipette tip 20, into the connection channel 16 within the guiding plate 14, and further into the gap 17 below the lower surface of the large guiding plate 14.

The sleeve 21 is separated in this embodiment from the fluid uptake area 11 by an inner wall 25, which here extends circumferentially around the sleeve 21. The inner wall 25 further extends in a direction from the distal end 3 towards the proximal end 2. The inner wall 25 thereby restricts the fluid uptake area 11 towards the medial axis 13, and the dimension and position of the inner wall 25 may be used for example to further influence the volume of and the fluid flow within the fluid uptake area 11, as discussed before. The inner wall 25 here even prevents that the outer side of an inserted pipette tip 20 is contacted by the fluid which is used for the treatment of a sample.

The inner wall 25 is connected to the inner side 6 of the exterior wall 4 by distance bars 24. The distance bars 24 are here joined additionally with the support bars 15, though they may alternatively also be separate from each other, provided they do not restrict the fluid connection of the fluid uptake area 11 with the surrounding atmosphere at the proximal end 2 of the pipette tip extension 1. The inner wall 25 is further connected to the guiding plate 14, which provides additional stability here. In this perspective sectional view, the interspace which is formed between the support bars 15, the outer edge of the guiding plate 14 and the inner side 6 of the exterior wall 4 can be seen. As discussed also for the other embodiments of the pipette tip extension 1, these interspaces which are generated when for example support bars 15 are used, provide a fluid passage from the gap 17 into the fluid uptake area 11. Interspaces may alternatively be formed by more grid-like or even membrane like configurations of the constriction element, as long as they additionally provide the end stop function.

In Fig. 7, a schematic sectional drawing of the pipette tip extension of Fig. 5B based on intersection plane B-B is shown. In this longitudinal section, two of the connection elements 28 are cut. For a better overview, a pipette tip 20 is shown to be inserted into the sleeve 21. In this section it can be seen that the sleeve, the connection elements 28, the inner wall 25 as well as the end stop 23, the guiding plate 14, the support bars 15, the distance bars 14, and the exterior wall 4 are produced in one piece, for example by injection moulding technology.

Although the diameter of the pipette tip extension 1 is in this case relatively large (it may be for example about 15 mm), a relatively small gap height h may nevertheless be generated (for example 0.4 mm). A smaller gap height h is particularly advantageously when only a small amount of liquid shall be used, for example for increasing the concentration of material gained in an extraction reaction, which is carried out on a tissue section. A smaller gap may also be of an advantage for improving the effect of a temperature treatment, when such a temperature treatment is directed primarily to the sample, and which requires that the fluid, which is present in the gap 17 and onto the tempered sample, is adapted to the temperature of the sample. In a smaller gap 17, the liquid may adapt relatively fast to the temperature of the sample. By means of the inner wall, the volume of liquid which is moved between an inserted pipette tip 20 and the pipette tip extension 1 may be further influenced, for example by providing a relatively small fluid uptake area 11.

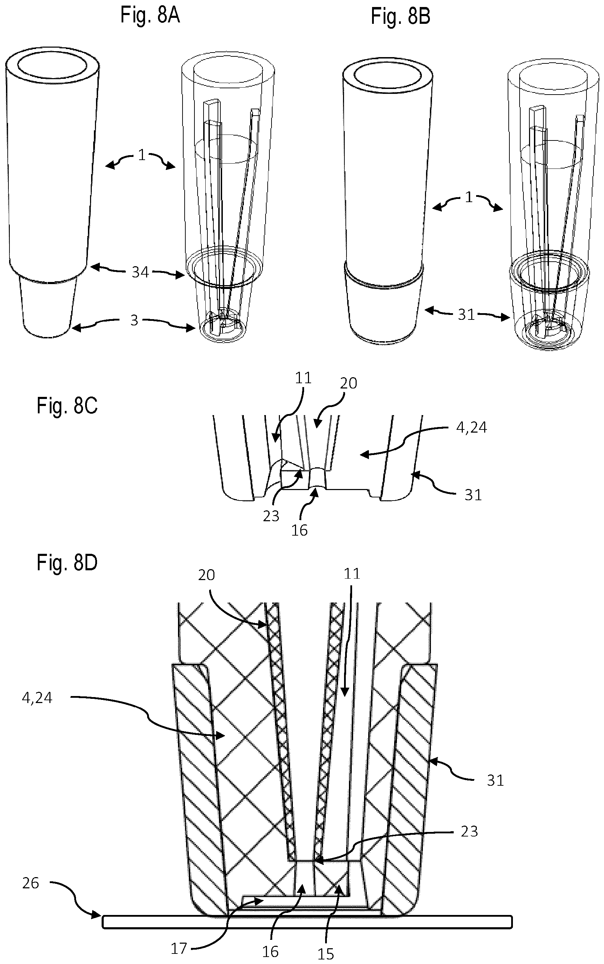

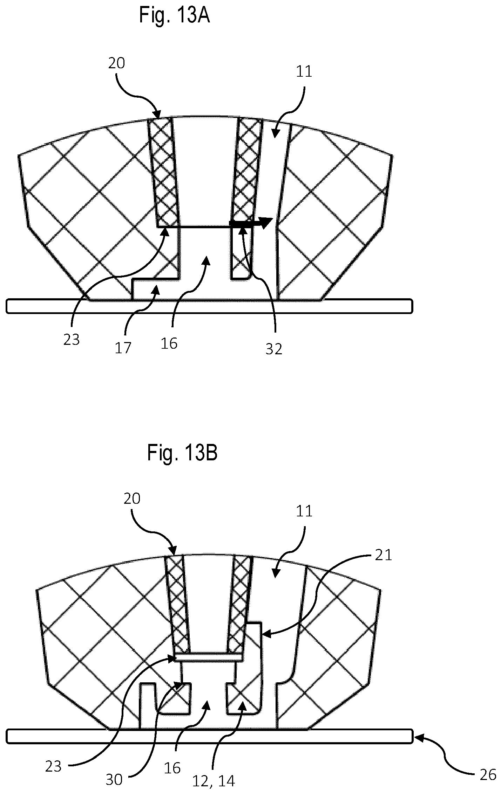

Fig. 8A to 8D show a two-part comparative example of a pipette tip extension, the body 1 of which may have most or all of the features of the one-part pipette tip extension as described in detail with figures 3A to 4B. The body 1 as shown separately in a 3 D and a transparent 3D scheme in Fig. 8A may comprise a circumferential step 34 and can be made of any plastic being stiff enough to hold its geometry under pressure when pressed on a glass slide for dispense and aspiration operations. Additionally, elasticity should be high enough to allow a friction or form fit with the pipette tip 20 to be inserted. As shown in Fig. 8B to 8C, onto that body 1 a collar seal 31 is mounted, e.g., flash to a step 34 which acts as stop for the collar 31. The latter being dimensioned to protrude the distal end 3, for about some tenths of a mm when mounted, and being made of a soft material to provide a good sealing when the pipette tip extension is pressed onto the sample 27, respectively onto the surface of the slide 26. Materials used for the body can be plastics as mentioned above, however polypropylenes in general due to their high chemical inertness, see also below, and specifically PP homopolymers or only slightly blended PP polymers would be preferred due to the availability of high hardness grades, e.g., up to Shore hardness D of 90 and higher, and its high elasticity. A specific example of a PP homopolymer with tradename Borealis HF955MO, is given under C1 in table 1, below, where some comparative and inventive examples have been listed. The material of the collar seal can be any material being on the one side soft enough to perform a sealing function and on the other side stable enough to be easily mounted on the body. Such materials can be plastic or natural rubbers, e.g., a silicon-rubber with a high chemical inertness. Details of the geometry are shown in a 3D- type cross-section in Fig. 8C and a schematic cross-section in Fig. 8D. Only the principle set up of a pipette tip extension 1 having a distal end 3, which forms a gap 17 when set on a glass slide 26 between the slide and support bars 15, respectively guiding plate 14, as well as respective end stop 23, connection channel and fluid uptake area 11 are shown. Further details and function of respective pipette tip extensions can be taken from figures 3A to 4B. Two-part pipette tip extensions as shown in Fig. 8A-D are perfectly fitted to perform reliable sealed dispense and aspiration operations and can be combined with a circumferential sleeve 21 to avoid shortcutting between the pipette tip and the fluid uptake area 11 as explained with Fig. 13B below.

However, as such pipette tip extensions to be used for mass analytical applications are expensive and not easily recyclable due to the two-part construction respectively due to two different materials to be used, intensive research efforts have been undertaken to develop a respective one-part, one material solution as shown in the following. An overview of some comparative and inventive examples is given in table 1, below.

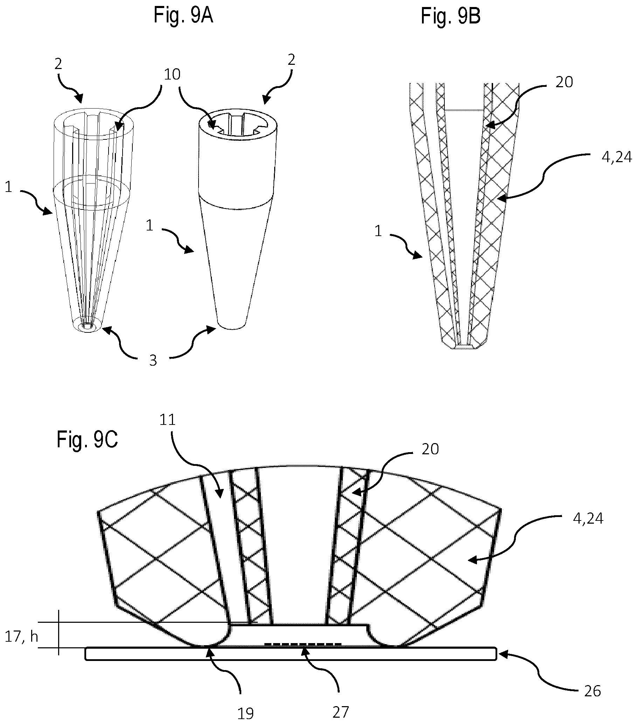

A comparative example of a one-part geometry and the same material as the body of pipette tip extension in comparative example C1 is shown in Figures 9A to 9C as comparative example C2. Due to slight surface imperfections unavoidable due to the injection moulding process and the high hardness of the material, no reliable seal could be provided by pressing a pipette tip with a respective pipette tip extension mounted on the surface of a test slide, i.e., during dispense and /or aspiration operations the test fluid (usually lyses buffer) leaked between the seal section 19 of the pipette tip extension 1 and the glass slide 25.

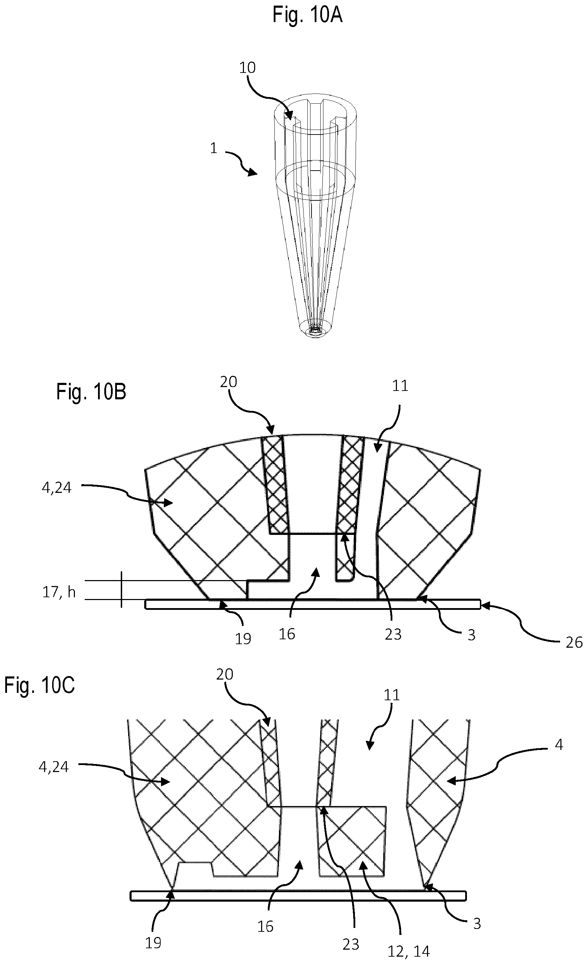

Fig. 10A to 10C show specific geometry examples of further comparative examples C3, C4 and C6, all based on the same type of pipette tip extension 1 as shown in the transparent 3D scheme in Fig. 10A. Further details and variations with regards to such pipette tip extensions can be found in figures 1A to 4B and respective description. Contrary to C1 these types of pipette tip extensions comprise at least a constriction element 12, e.g., to provide an end stop for the pipette tip 23, which is not in use with embodiments as shown in figures 9A to 9C of embodiment C2. Special embodiments of the distal end 3 region of pipette tip extensions according to embodiment C3, C4 and C6 are shown in Fig. 10 A and 10B in schematic cross sections. Contrary to the pipette tip extension as shown in Fig. 9A, where three downwards tapering distance elements are provided from the very proximal end 2 until about a lower third of the pipette tip extension, the pipette tip extension as shown in Fig. 10A shows respective tapering distance elements 10 extending from an upper part of the pipette tip extension until the stop surface near the lower / distal end.

With embodiment C3 a pipette tip extension being configured according to Fig. 10B has been injection moulded from a relatively soft thermoplastic elastomer (TPE, tradename: Medipren OF601M) of a shore hardness A of 60 which provided good sealing properties. This material however proved to be not stable enough as the height h of gap 17 between the slide and the pipette tip extension varied strongly depending on the contact pressure which may vary depending on the type of liquid handling workstation and operation status (dispense, aspiration, idle).

Therefore, with comparative embodiment C4 a harder type of TPE, having a shore hardness A of 87 (tradename: Mediprene OF901M) has been tested with the same geometry, whereby a good sealing of the seal section 19 towards test slides 26 and less deformation could be achieved. Fluid short cuts occurred in isolated cases. The same results could be achieved with comparative example C5 where a pipette tip extension according to Fig. 8 (i.e., without a collar seal) and a respective type of TPE as with C4 have been used. However during PCR tests with the respective TPE material a substantial scatter in the test results has been observed, which might be attributed to leaching of unknown PCR inhibitors or detrimental high binding properties for DNA/RNA which have not been investigated in detail, as this TTP material has not been approved as a medical grad material up to now. Respective tests with geometries according to figures 8A, here again without a collar seal, and 10B with the medical grade PP material used for comparative example C1 and C2 as described above, failed due to the same reasons as described with C2.

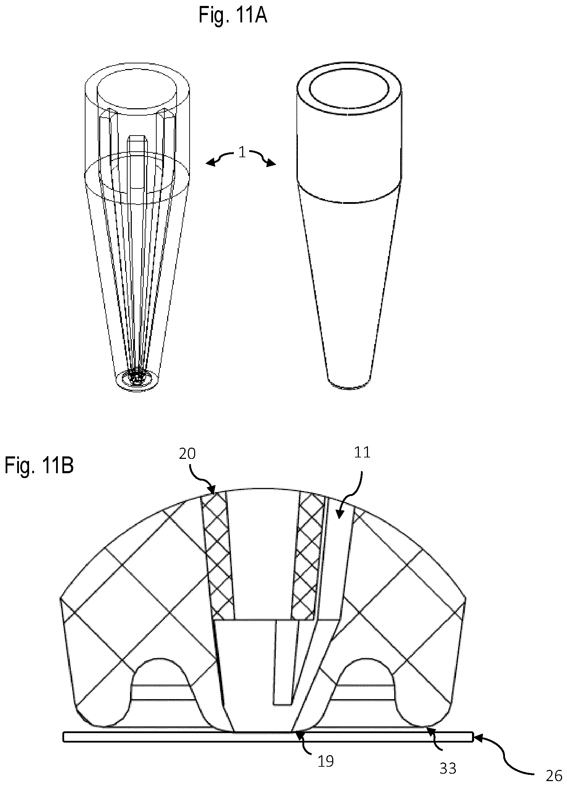

Therefore, further geometries according to comparative example C6 with constriction element 4, as shown in Fig. 10C, and comparative example C7 without constriction element as shown in Fig. 11A and 11B, have been tested with a respective PP homopolymer material. Fig. 10C shows a pipette tip extension which differs to 10B only in details of the distal end 3 and the grade of magnification. The seal section 19 in Fig. 10C having a very reduced thickness of the exterior wall 4 at and near the distal end 3 to allow a higher pressure on the remaining contact surface to the glass slide and thereby allow mechanical deformation of the plastic to enforce sealing when the seal section 19 is pressed onto a plane surface. Similarly, the geometry of the external wall 4 has been varied in Fig. 11B at the seal section 19 of the pipette tip extension 1. Additionally, in this case an outer stop ring 33 has been integrally provided to the distal end 3, encompassing the seal section in a distance and some tenth of a millimetre recessed within, to provide mechanical stability after a certain degree of enforced deformation of the seal section 19 has been reached by pressing on the slide 26. However, both combinations of respective geometries and PP homopolymer material could not provide a consistently reliable sealing function of the distal end 3.

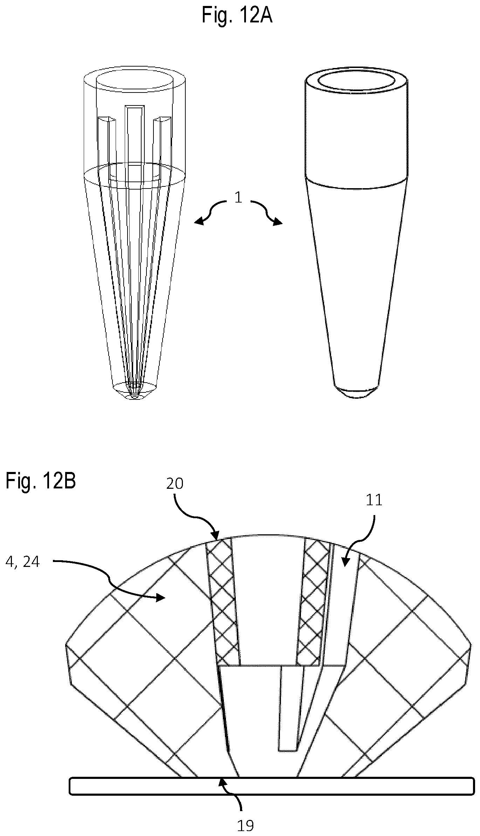

Comparative example C8 using a geometry as shown in Fig. 12A and 12B, again without a constriction element, and using a liquid silicon rubber (trade name: Silpuran), having a shore hardness A of 70, has been tested to give a reliable seal between the slide and the pipette tip extension as well as holding the grade of deformation with reference to the respective geometry of gap 17 and fluid uptake area 11 tolerable. However also this solution did not prove to be very suitable for mass production as two relatively expensive components have to be injected simultaneously into a heated form to produce the fine structures of a pipette tip extension in a reliable and reproducible manner.

The seal itself can be, as far as an appropriate material is used for any one-part pipette tip extension, the seal section 19 of the respective distal end 3 itself, which thereby forms a sealing area, as shown in Fig. 2A, 3A, 3B, 4B, 7, 9C, 10B, 12B, 14C, 15C, 16B, or alternatively be a separate ring or collar gasket, like collar seal 31 as shown and described on the basis of Fig. 8B to 8C below.

In Fig. 13A a problem is shown which may occur with pipette tip extensions having a constriction element 12 and an end stop even in cases where a fluid tight sealing is provided between the seal section 19 or a separate seal 31 and the slide 26. So called fluid short cuts as symbolized by arrow 32 may occur between the pipette tip 20 and the constriction element 12, which can be the guiding plate 14. Thereby, only a part of the fluid volume dispensed from the pipette tip flows via the connection channel 16 into the gap 7 where the flow is redirected by the slide 26 towards the fluid uptake area 11, whereby sample 27 is flushed from the surface of the test slide during a dispense operation of the pipette. However, a part of the fluid volume may be lost for the flushing operation when a short cut 32 occurs. On the other hand, during aspiration operations when there is a leakage between the pipette tip 20 and the constriction element, again fluid or environmental air may be sucked in the opposite direction directly from the fluid uptake 11 instead of taking the intended flow path via the gap 17 and connection channel 16 back into the pipet, which again may result in an insufficient washing of the sample from the test slide.

In Fig. 13B a respective solution against shortcuts is shown which encompasses a pipette tip extension having a sleeve, where the distal end of the sleeve 21 is adjoined to a thickened guiding plate 14. The guiding plate 14 comprises the end stop 23, a connection channel 16 which mouths into the distal end of the sleeve 21. The connection channel 16 has an upper diameter which is slightly smaller than the diameter of the adjacent distal end of the sleeve, so that a shoulder is formed at the distal end of the sleeve 21. This shoulder is abutted by a distal end of a pipette tip 20 which is inserted into the pipette tip extension 1 and thus functions as an end stop 23 for controlling an insertion depth of a pipette tip 20. A pipette tip 20 which abuts the shoulder is thereby prevented to further move towards the distal end 3 of the pipette tip extension 1. The sleeve in this case is liquid-tight connected to the end stop whereby a cup like unit is formed having a cylindrical continuation of the connection channel towards the gap. To avoid fluid shortcutting between the pipette tip and the fluid uptake area safely the inner diameter of the sleeve just before the end stop is made to encompasses the pipette tips 20 closely, e.g., having the same or even a slightly undersized diameter with respect to the outer pipette tip diameter.

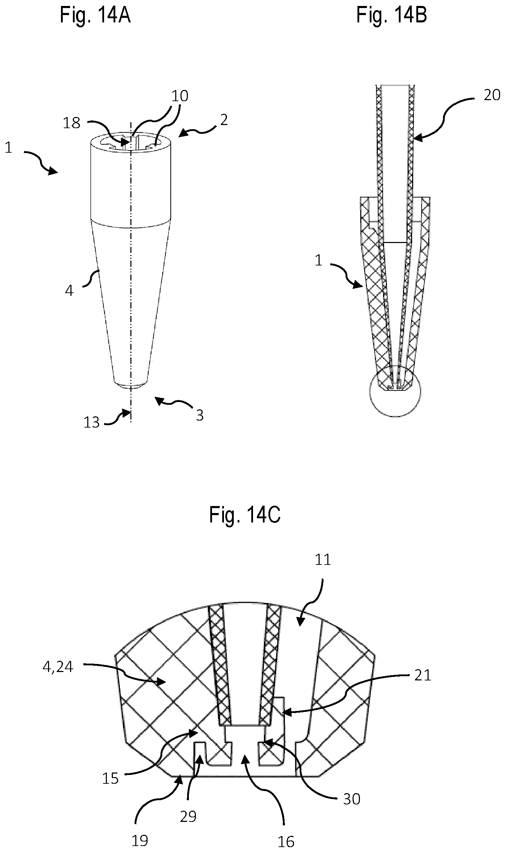

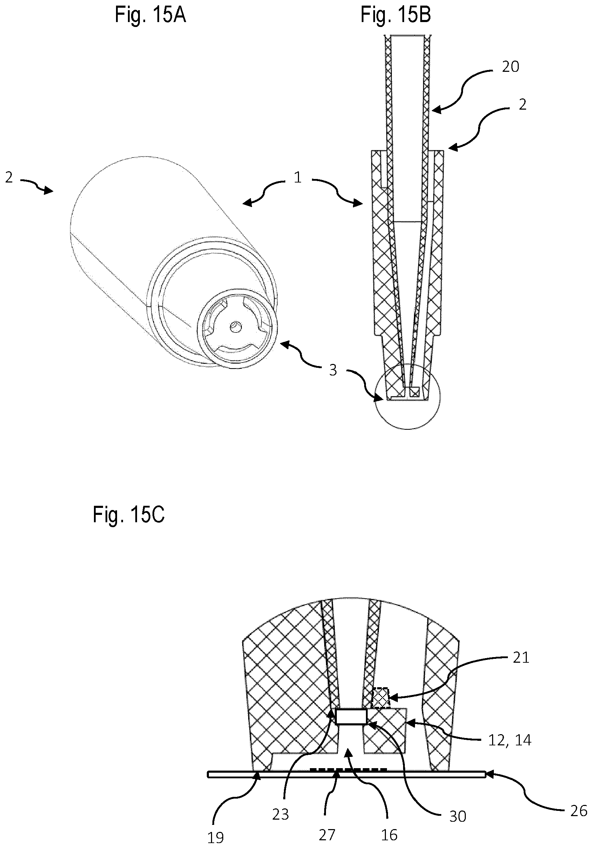

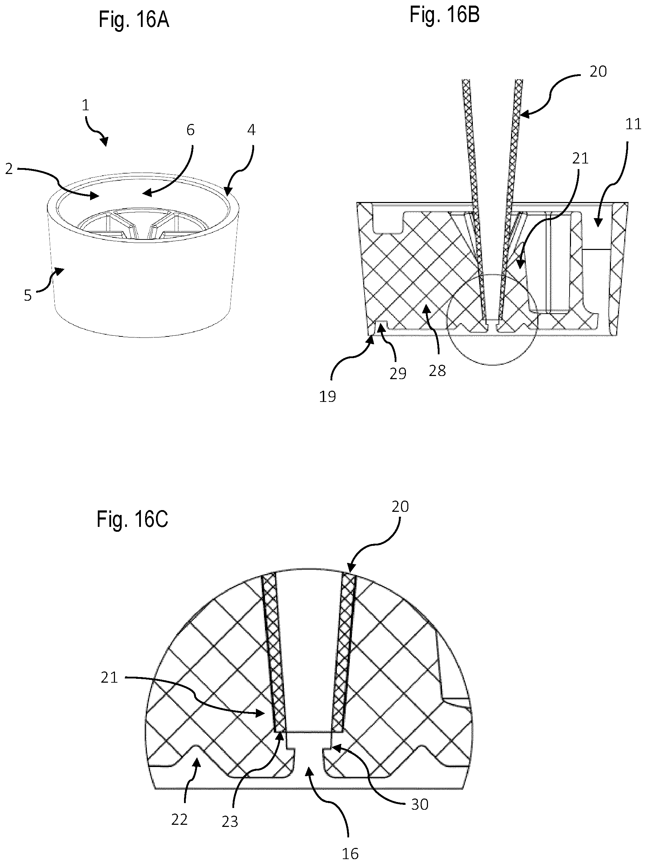

Figures 14A to 16C show inventive embodiments 19 (Fig. 14A to 14C), 110 (Fig. 15A to 15C), 111 (Fig. 16A to 16C) which surprisingly all worked well with the respective geometries when produced as a one-part pipette tip extension from a respective heterophasic polypropylene copolymer (**h-PP**) in a hardness range as defined above. This means that the sealing section 19 could despite of the relatively high hardness of the material provide a perfect sealing function during any dispense and aspiration operation when the pipette tip extension of the respective type was slightly pressed towards a clean glass slide or a slide with a test sample 27 applied.

With all these embodiments however, as shown in Fig. 14C, 15C and 16C, the lower parting 30 line has been shifted from the usually lowest possible place, here the orifice of the connection channel 16 into the gap 17, whereby surprisingly a more evenly flow of the test liquid in the gap and a correspondingly more uniform washing of the sample from the slide surface could be achieved. To reach this result the parting line should be recessed at least for 0,3 millimeter, preferably for 0.5 to 2,5 mm from the lower orifice of the connection channel. The parting line hereby is an unavoidable line of small imperfections on the surface of an injection molded part, here the pipette tip extension, and forms in the immediate vicinity of a circumferential line where two parts of a mold are separated after the injection molding process. In this case the lower parting line 30 is formed at the inner diameter of a further little step below the end stop 23 of the pipette tip in the connection channel 16. The upper parting line is not shown as being uncritical to the function, e.g. when provided at the exterior wall near or at the proximal end.

Additionally, and again shown in Fig. 14C, 15C and 16B, the respective pipette tip extensions can be provided with an optional (as shown in Fig. 15C) cup like unit comprising the sleeve 21 and the guiding plate 14, e.g., similar to that described with Fig. 13B having a cylindrical continuation of the connection channel towards the gap. This adds to a further safety buffer against eventually fluid short cuts 32, despite of the fact, that nearly no short cuts could be observed, even when geometries like shown in Fig. 8 C or 10B have been used with pipette tip extension made from the respective heterophasic polypropylene copolymer (**h-PP**).

With Fig. 14C and Fig. 16B a cut out section 29 is shown which extends the height (h) of the gap immediately adjacent to the inner side 6 of the exterior wall 4. In case of Fig 14C the support bars 15 connecting the guiding plate to the inner side 6 of the exterior wall 4 are provided with a cut out section 29, in case of Fig. 16B the connection elements 28 connecting the inner wall to the sleeve are provided with the cut out section 29 in addition to groove 22 to optimize fluid flow during dispense and aspiration operations.

For further details which can be combined with the specific features as shown in Fig. 14A to 14C it should be referred to figures 1A to 2B.

For further details which can be combined with the specific features as shown in Fig. 15A to 15C it should be referred to figures 3A to 4B.

For further details which can be combined with the specific features as shown in Fig. 16A to 16C it should be referred to figures 4A to 7.

**Table 1**

| **Ex.** | **Material** | **Tradename** | **Hardness Shore A** | **Hardness Shore D** | **Hardness Rock. R** | **T_{M} °C** | **MFR g/10min** | **Density kg/m³** | **Geometry Figure** | **sealing +/-** | **Results** |
|---|---|---|---|---|---|---|---|---|---|---|---|
| C1 | Body: PP1 | Borealis HF955MO | Out of Range (OoR) | > 90 | 112 | > 121 | 20 | 905 | 8A-C | Not relevant | formstable also under pressure |
| C1 | Seal: | NA | elastic | elastic | elastic | NA | NA | NA | 8B, 8C | ++ | slightly sticky but less relevant as not within the gap |
| C2 | PP1 | Borealis HF955MO | » 100 | > 90 | 112 | > 121 | 20 | 905 | 9A-C | -- | No reliable seal; |
| C3 | TPE1 | Mediprene OF601M | 60 | about 16 | out of range | > 125 | 9 | 890 | 10A, 10B | ++ | TPE not hard/ stable enough, gap geometry dependent on force; material slightly sticky |
| C4 | TPE2 | Mediprene OF901M | 87 | about 35 | out of range | > 125 | 12 | 890 | 10A, 10B | + | seal still reliable; less deformation; slightly sticky; interfer. with DNA/RNA? |
| C5 | TPE2 | Mediprene OF901M | 87 | about 35 | out of range | > 125 | 12 | 890 | 8A | + | seal still reliable; less deformation; slightly sticky; interfer. with DNA/RNA? |

**Table 1 (continuation)**

| **Ex.** | **Material** | **Tradename** | **Hardness Shore A** | **Hardness Shore D** | **Hardness Rock. R** | **T_{M} °C** | **MFR g/10min** | **Density kg/m³** | **Geometry Figure** | **sealing +/-** | **Results** |
|---|---|---|---|---|---|---|---|---|---|---|---|
| C6 | PP1 | Borealis HF955MO | » 100 | > 90 | 112 | > 121 | 20 | 905 | 10A, 10C | - | No consistently reliable seal |
| C7 | PP1 | Borealis HF955MO | » 100 | > 90 | 112 | > 121 | 20 | 905 | 11A, 11B | - | No consistently reliable seal |
| C8 | LSR | Silpuran 6000/70 | 70 | about 22 | out of range | NA | NA | 1150 | 12A, 12B | ++ | reliable seal but sticky surface; two components, expens. material |
| I9 | PP2 | Borealis SB815MO | about 96.3 | 51 | out of range | 145 | 1,5 | 900±10 | 14A-16C | ++ | reliable seal; easy to handle; favorable raw material |
| I10 | PP3 | Borealis SC820CF | about 98.0 | 53 | about 50 | 141 | 3,9 | 900±10 | 15A-15C | ++ | reliable seal; easy to handle; favorable raw material |
| I11 | PP3 | Borealis SC820CF | about 98.0 | 53 | about 50 | 141 | 3,9 | 900±10 | 16A-16C | ++ | reliable seal; easy to handle; favorable raw material |

### Abbreviations Table 1:

| | | | |
|---|---|---|---|
| Ex. | Example | Rock. R | Rockwell R according to ISO 2039-2 |
| LSR | Liquid Silicone Rubber | TM | Melting temperature |
| MFR | Melt flow ratio [230°C, 2,16kg] | TPE1, 2 | Thermoplastic elastomer 1, 2 |
| PP1 | Homopolymeric polypropylen 1 | PP2, 3 | h-PP 2, 3 |

### REFERENCE SIGNS LIST

| | | | |
|---|---|---|---|
| 1 | pipette tip extension | 22 | groove |
| 2 | proximal end | 23 | end stop |
| 3 | distal end | 24 | distance bar |
| 4 | exterior wall | 25 | inner wall |
| 5 | outer side of 4 | 26 | microscopic slide |
| 6 | inner side of 4 | 27 | sample |
| 7 | reception aperture | 28 | connection element |
| 8 | dispense aperture | 29 | cut out section |
| 9 | inner cavity | 30 | parting line |
| 10 | distance element | 31 | collar (seal) |
| 11 | fluid uptake area | 32 | short cut |
| 12 | constriction element | 33 | outer stop ring |
| 13 | medial axis of 1 | 34 | circumferential step |
| 14 | guiding plate | 35 | shoulder |
| 15 | support bars | | |
| 16 | connection channel | h | gap height |
| 17 | gap | | |
| 18 | surface of 10 | | |
| 19 | seal section | | |
| 20 | pipette tip | | |
| 21 | sleeve | | |

## Claims

1. A pipette tip extension (1) attachable to a pipette tip (20), the pipette tip extension (1) comprising:
- a proximal end (2), a distal end (3), and an exterior wall (4) extending between the proximal end (2) and the distal end (3), the exterior wall (4) having an outer side (5) and an inner side (6) and forming at the proximal end (2) a reception aperture (7) for inserting a pipette tip (20), and at the distal end a dispense aperture (8),
- an inner cavity (9) enclosed by the inner side (6) of the exterior wall (4),
- one or more distance elements (10) connected to the inner side (6) of the exterior wall (4), the distance element(s) (10) being configured to position a pipette tip (20) within the inner cavity (9) and to establish a fluid uptake area (11) adjacent to the inner side (6) of the exterior wall (4), the fluid uptake area (11) extending from the dispense aperture (8) towards the reception aperture (7) and being in fluid connection with the surrounding atmosphere at the reception aperture (7),
the pipette tip extension being configured as an integrally produced workpiece, and being made of a non-polar olefine based polypropylene (PP) composition comprising at least 85% of a **heterophasic polypropylene copolymer** (**h-PP**), the latter comprising a **propylene random copolymer matrix phase** (**r-PPM**), an **elastomeric propylene copolymer** (**e-PP**) dispersed in the matrix, and optionally the PP composition may comprise **polyethylene** (**PE**) dispersed in the matrix, whereat the polypropylene composition has a shore hardness D from 45-60.

2. The pipette tip extension according to claim 1, whereat the polypropylene composition has:
- a melting temperature between 130-160°C and
- a melt flow rate (MFR, 230°C/2.16kg) according to ISO 1133 from 0.5-6.0 g/10 min.

3. The pipette tip extension according to any of the foregoing claims, whereat the heterophasic polypropylene copolymer (h-PP) comprises at least 65 to 90 wt-% of the **propylene random copolymer matrix phase** (**r-PPM**), whereat the comonomer of the r-PPM is ethylene and/or C₄ to C₁₂ olefins, and the h-PP comprises 15 to 35 wt-% of a dispersed phase comprising an **elastomeric propylene copolymer** (**e-PP**) having ethylene and/or C₄ to C₁₂ olefins as comonomers.

4. The pipette tip extension according to any of the foregoing claims, whereat the **r-PPM** has ethylene as comonomer and/or the **e-PP** has ethylene as comonomer.

5. The pipette tip extension according to claim 4, whereat the ethylene comonomer content of the **r-PPM** is 3 to 20 wt-% with reference to the **r-PPM.**

6. The pipette tip extension according to claim 4 or claim 5, whereat the ethylene comonomer content of the **e-PP** is 20 to 40 wt-% with reference to the **e-PP.**

7. The pipette tip extension according to any of the foregoing claims, whereat the content of the PE dispersed in the matrix phase is equal or less than 15 wt-% of the composition.

8. The pipette tip extension according to any of the foregoing claims, the composition further comprising a polymeric α-nucleating agent in a range of 0.0001 to 5 wt-% of the composition.

9. The pipette tip extension according to any of the preceding claims, further comprising a **constriction element** (12) to control an insertion depth of a pipette tip (20) within the pipette tip extension (1), the constriction element defining a gap height between a distal end of an inserted pipette tip and the distal end of the pipette tip extension.

10. The pipette tip extension according to claim 9, the constriction element being configured as a fluid-permeable sieve-like structure, wherein the constriction element (12) comprises a guiding plate (14), support bars (15) and a connection channel (16), wherein the guiding plate (14) defines or is connected to an end stop (23) for a pipette tip (20), the guiding plate (14) being connected to an inner side (6) of the exterior wall (4) by the support bars 15 close to but offset of a distal end (3) of the pipette tip extension (1), delimiting together with the inner side (6) of the exterior wall (4) a gap (17) of a gap height (h) at the distal end (3) of the pipette tip extension (1), the support bars (15) providing one or more passages for fluidly connecting the gap (17) with the fluid uptake area (11) .

11. The pipette tip extension according to any of the foregoing claims, wherein the distance element(s)(10) or the constriction element is or forms a **sleeve** (21) which is configured to receive and circumferentially enclose a distal end of a pipette tip (20) within the inner cavity (9), wherein the sleeve (21) is adapted to the shape of a distal end of a pipette tip (20) in a liquid-tight manner.

12. The pipette tip extension (1) according to any of the foregoing claims, comprising at least two, preferably at least three additional distance elements (10), each distance element (10) being configured as a distance bar (24) which extends along a direction from the proximal end (2) towards the distal end (3) of the pipette tip extension (1), wherein the form of the distance bars and the position of the distance bars are configured such that each distance bar (24) can be abutted by an outer side of a pipette tip (20) when inserted into the pipette tip extension (1).

13. The pipette tip extension according to one of claims 9 to claim 12, wherein the distance element(s) (10) is connected to the inner side (6) of the exterior wall (4), and the **constriction element** (12) is connected to the inner side (6) of the exterior wall (4) of the pipette tip extension (1), thereby defining an **end stop (23)** for a pipette tip (20), and being configured as a fluid-permeable sieve-like structure.

14. The pipette tip extension (1) according to one of the foregoing claims, wherein
the **distance element (10) is configured as a sleeve (21)** for receiving and circumferentially enclosing a distal end of a pipette tip (2), the sleeve (21) being open at the distal end for allowing a liquid being dispensed from an inserted pipette tip (20) into the gap (17), and
wherein the end stop (23) is configured as an elongated, tubular hollow cylinder which provides a passage for fluidly connecting an inserted pipette tip (20) with the gap (17),
wherein the sleeve (21) and the end stop (23) are fluidly connected to provide the fluid connection between the pipette tip (20) and the gap (17).

15. The pipette tip extension (1) according to claim 1, wherein the guiding plate (14) is configured as a ring-like guiding plate (14) or as a shim-like guiding plate (14) or as a plate-like guiding plate (14).

16. The pipette tip extension according to any of claims 10 to 15, wherein the one or more support bars (15) connecting the guiding plate to the inner side (6) of the exterior wall (4), or a connection element (28) connecting the inner wall to the sleeve have a cut out section (29) provided to extend the height (h) of the gap immediately adjacent to the inner side (6) of the exterior wall (4).

17. The pipette tip extension according to any of the preceding claims, wherein the pipette tip extension is produced by injection molding of the respective polypropylene composition.

18. The pipette tip extension according to any of the preceding claims, wherein the parting line (30) of at least two mold parts used to produce the pipette tip extension is shifted into the dispense aperture (8) or into the connection channel (16).

## Patentansprüche

1. Pipettenspitzenverlängerung (1), die an einer Pipettenspitze (20) angebracht werden kann, wobei die Pipettenspitzenverlängerung (1) Folgendes umfasst:
- ein proximales Ende (2), ein distales Ende (3) und eine Außenwand (4), die sich zwischen dem proximalen Ende (2) und dem distalen Ende (3) erstreckt, wobei die Außenwand (4) eine Außenseite (5) und eine Innenseite (6) aufweist und am proximalen Ende (2) eine Aufnahmeöffnung (7) zum Einführen einer Pipettenspitze (20) und am distalen Ende eine Abgabeöffnung (8) bildet,
- einen inneren Hohlraum (9), der von der Innenseite (6) der Außenwand (4) umschlossen wird,
- ein oder mehrere Distanzelemente (10), die mit der Innenseite (6) der Außenwand (4) verbunden sind, wobei das/die Distanzelement(e) (10) so ausgebildet ist/sind, dass es/sie eine Pipettenspitze (20) in dem inneren Hohlraum (9) positioniert/positionieren und einen an die Innenseite (6) der Außenwand (4) angrenzenden Flüssigkeitsaufnahmebereich (11) bildet/bilden, wobei sich der Flüssigkeitsaufnahmebereich (11) von der Abgabeöffnung (8) in Richtung der Aufnahmeöffnung (7) erstreckt und an der Aufnahmeöffnung (7) mit der umgebenden Atmosphäre in Fluidverbindung steht,
wobei die Pipettenspitzenverlängerung als ein einstückig hergestelltes Werkstück ausgebildet ist und aus einer unpolaren Polypropylen (PP)-Zusammensetzung auf Olefinbasis besteht, die mindestens 85% eines heterophasischen Polypropylen-Copolymers (h-PP) umfasst, wobei letzteres eine statistische Propylen-Copolymer-Matrixphase (r-PPM), ein in der Matrix dispergiertes elastomeres Propylen-Copolymer (e-PP) umfasst, und die PP-Zusammensetzung optional ein in der Matrix dispergiertes Polyethylen (PE) umfasst, wobei die Polypropylenzusammensetzung eine Shore-Härte D von 45-60 aufweist.

2. Pipettenspitzenverlängerung nach Anspruch 1, wobei die Polypropylenzusammensetzung:
- eine Schmelztemperatur zwischen 130-160°C und
- eine Schmelzflussrate (MFR, 230°C/2,16kg) gemäß ISO 1133 von 0,5-6,0 g/10 min aufweist.

3. Pipettenspitzenverlängerung nach einem der vorstehenden Ansprüche, wobei das heterophasige Polypropylen-Copolymer (h-PP) mindestens 65 bis 90 Gew.-% der Propylen-Random-Copolymer-Matrixphase (r-PPM) umfasst, wobei das Comonomer des r-PPMs Ethylen und/oder C4- bis C12-Olefine umfasst, und das h-PP 15 bis 35 Gew.-% einer dispergierten Phase umfasst, die ein elastomeres Propylen-Copolymer (e-PP) mit Ethylen und/oder C4- bis C12-Olefinen als Comonomere umfasst.

4. Pipettenspitzenverlängerung nach einem der vorangehenden Ansprüche, wobei das r-PPM Ethylen als Comonomer aufweist und/oder das e-PP Ethylen als Comonomer aufweist.

5. Pipettenspitzenverlängerung nach Anspruch 4, wobei der Ethylencomonomergehalt des r-PPM 3 bis 20 Gew.-%, bezogen auf das r-PPM, beträgt.

6. Pipettenspitzenverlängerung nach Anspruch 4 oder Anspruch 5, wobei der Ethylencomonomergehalt des e-PP 20 bis 40 Gew.-%, bezogen auf das e-PP, beträgt.

7. Pipettenspitzenverlängerung nach einem der vorangehenden Ansprüche, wobei der Gehalt des in der Matrixphase dispergierten PE gleich oder weniger als 15 Gew.-% der Zusammensetzung beträgt.

8. Pipettenspitzenverlängerung nach einem der vorangehenden Ansprüche, wobei die Zusammensetzung ferner ein polymeres α-Keimbildungsmittel in einem Bereich von 0,0001 bis 5 Gew.-% der Zusammensetzung enthält.

9. Pipettenspitzenverlängerung nach einem der vorangehenden Ansprüche, ferner umfassend ein Verengungselement (12) zur Steuerung einer Einführtiefe einer Pipettenspitze (20) innerhalb der Pipettenspitzenverlängerung (1), wobei das Verengungselement eine Spalthöhe zwischen einem distalen Ende einer eingeführten Pipettenspitze und dem distalen Ende der Pipettenspitzenverlängerung definiert.

10. Pipettenspitzenverlängerung nach Anspruch 9, wobei das Verengungselement als flüssigkeitsdurchlässige siebartige Struktur ausgebildet ist, wobei das Verengungselement (12) eine Führungsplatte (14), Stützstege (15) und einen Verbindungskanal (16) aufweist, wobei die Führungsplatte (14) einen Endanschlag (23) für eine Pipettenspitze (20) definiert oder mit diesem verbunden ist, die Führungsplatte (14) mit einer Innenseite (6) der Außenwand (4) durch die Stützstäbe (15) nahe, aber versetzt zu einem distalen Ende (3) der Pipettenspitzenverlängerung (1) verbunden ist, und zusammen mit der Innenseite (6) der Außenwand (4) einen Spalt (17) mit einer Spalthöhe (h) am distalen Ende (3) der Pipettenspitzenverlängerung (1) begrenzt, wobei die Stützstäbe (15) einen oder mehrere Durchgänge zur fluidischen Verbindung des Spalts (17) mit dem Fluidaufnahmebereich (11) bereitstellen.

11. Pipettenspitzenverlängerung nach einem der vorangehenden Ansprüche, wobei das/die Abstandselement(e) (10) oder das Verengungselement eine Hülse (21) ist oder bildet, die so konfiguriert ist, dass sie ein distales Ende einer Pipettenspitze (20) in dem inneren Hohlraum (9) aufnimmt und in Umfangsrichtung umschließt, wobei die Hülse (21) an die Form eines distalen Endes einer Pipettenspitze (20) flüssigkeitsdicht angepasst ist.

12. Pipettenspitzenverlängerung (1) nach einem der vorhergehenden Ansprüche, umfassend mindestens zwei, vorzugsweise mindestens drei zusätzliche Distanzelemente (10), wobei jedes Distanzelement (10) als ein Distanzsteg (24) ausgebildet ist, der sich entlang einer Richtung vom proximalen Ende (2) zum distalen Ende (3) der Pipettenspitzenverlängerung (1) erstreckt, wobei die Form der Abstandsstege und die Position der Abstandsstege so gestaltet sind, dass jeder Abstandssteg (24) an einer Außenseite einer Pipettenspitze (20) anliegen kann, wenn diese in die Pipettenspitzenverlängerung (1) eingesetzt ist.

13. Pipettenspitzenverlängerung nach einem der Ansprüche 9 bis 12, wobei das/die Distanzelement(e) (10) mit der Innenseite (6) der Außenwand (4) und das Verengungselement (12) mit der Innenseite (6) der Außenwand (4) der Pipettenspitzenverlängerung (1) verbunden sind, wodurch ein Endanschlag (23) für eine Pipettenspitze (20) definiert wird und als fluiddurchlässige siebartige Struktur ausgebildet ist.

14. Pipettenspitzenverlängerung (1) nach einem der vorhergehenden Ansprüche, wobei das Distanzelement (10) als Hülse (21) zur Aufnahme und zum umlaufenden Umschließen eines distalen Endes einer Pipettenspitze (2) ausgebildet ist,
wobei die Hülse (21) am distalen Ende offen ist, um eine Flüssigkeit aus einer eingesetzten Pipettenspitze (20) in den Spalt (17) abgeben zu können,
wobei der Endanschlag (23) als ein länglicher, röhrenförmiger Hohlzylinder ausgebildet ist, der einen Durchgang zur Fluidverbindung einer eingesetzten Pipettenspitze (20) mit dem Spalt (17) bereitstellt, und
wobei die Hülse (21) und der Endanschlag (23) fluidisch verbunden sind, um die Fluidverbindung zwischen der Pipettenspitze (20) und dem Spalt (17) herzustellen.

15. Pipettenspitzenverlängerung (1) nach Anspruch 1, wobei die Führungsplatte (14) als ringförmige Führungsplatte (14) oder als keilförmige Führungsplatte (14) oder als plattenförmige Führungsplatte (14) ausgebildet ist.

16. Pipettenspitzenverlängerung nach einem der Ansprüche 10 bis 15, wobei die eine oder die mehreren Haltestangen (15), die die Führungsplatte mit der Innenseite (6) der Außenwand (4) verbinden, oder ein Verbindungselement (28), das die Innenwand mit der Hülse verbindet, einen ausgeschnittenen Abschnitt (29) aufweisen, der vorgesehen ist, um die Höhe (h) des Spalts unmittelbar neben der Innenseite (6) der Außenwand (4) zu verlängern.

17. Pipettenspitzenverlängerung nach einem der vorhergehenden Ansprüche, wobei die Pipettenspitzenverlängerung durch Spritzgießen der jeweiligen Polypropylenzusammensetzung hergestellt ist.

18. Pipettenspitzenverlängerung nach einem der vorhergehenden Ansprüche, **dadurch gekennzeichnet, dass** die Trennlinie (30) von mindestens zwei zur Herstellung der Pipettenspitzenverlängerung verwendeten Formteilen in die Abgabeöffnung (8) oder in den Verbindungskanal (16) verlagert ist.

## Revendications

1. Extension d'embout de pipette (1) pouvant être fixée à un embout de pipette (20), l'extension d'embout de pipette (1) comprenant :
- une extrémité proximale (2), une extrémité distale (3), et une paroi extérieure (4) s'étendant entre l'extrémité proximale (2) et l'extrémité distale (3), la paroi extérieure (4) ayant un côté extérieur (5) et un côté intérieur (6) et formant au niveau de l'extrémité proximale (2) un orifice de réception (7) pour insérer un embout de pipette (20) et formant au niveau de l'extrémité distale un orifice de distribution (8),
- une cavité intérieure (9) délimitée par le côté intérieur (6) de la paroi extérieure (4),
- un ou plusieurs éléments d'écartement (10) raccordés au côté intérieur (6) de la paroi extérieure (4), le ou les élément(s) d'écartement (10) étant conçu(s) pour positionner un embout de pipette (20) dans la cavité intérieure (9) et pour créer une zone d'absorption de liquide (11) adjacente au côté intérieur (6) de la paroi extérieure (4), la zone d'absorption de liquide (11) s'étendant depuis l'orifice de distribution (8) vers l'orifice de réception (7) et étant en connexion fluidique avec l'atmosphère ambiante au niveau de l'orifice de réception (7),
l'extension d'embout de pipette étant réalisée sous la forme d'une pièce réalisée d'un seul tenant et étant fabriquée à partir d'une composition de polypropylène (PP) à base d'oléfine non polaire comprenant au moins 85 % d'un **copolymère de polypropylène hétérophasique (h-PP),** ce dernier comprenant une **phase matricielle de copolymère aléatoire de propylène (r-PPM),** un **copolymère de propylène élastomère (e-PP)** dispersé dans la matrice, et en option la composition PP pouvant comprendre du **polyéthylène (PE)** dispersé dans la matrice, la composition de polypropylène présentant une dureté Shore D comprise entre 45 et 60.

2. Extension d'embout de pipette selon la revendication 1, la composition de polypropylène présentant :
- une température de fusion comprise entre 130 et 160 °C, et
- une vitesse d'écoulement à l'état fondu (VEF, 230°C/2,16 Kg) selon ISO 1133 comprise entre 0,5 et 6,0 g/10 min.

3. Extension d'embout de pipette selon l'une des revendications précédentes, dans laquelle le copolymère de polypropylène hétérophasique (h-PP) comprend au moins de 65 à 90 % en poids de la **phase matricielle de copolymère aléatoire de propylène (r-PPM),** dans laquelle le comonomère de la r-PPM est de l'éthylène et/ou des oléfines C₄ à C₁₂ et le h-PP comprend de 15 à 35 % en poids d'une phase dispersée comprenant un **copolymère de propylène élastomère (e-PP)** ayant de l'éthylène et/ou des oléfines C₄ à C₁₂ comme comonomères.

4. Extension d'embout de pipette selon l'une des revendications précédentes, dans laquelle la **r-PPM** présente de l'éthylène comme comonomère et/ou dans laquelle le **e-PP** présente de l'éthylène comme comonomère.

5. Extension d'embout de pipette selon la revendication 4, dans laquelle la teneur en comonomère d'éthylène de la **r-PPM** est comprise entre 3 et 20 % en poids par rapport à la **r-PPM.**

6. Extension d'embout de pipette selon la revendication 4 ou 5, dans laquelle la teneur en comonomère d'éthylène du **e-PP** est comprise entre 20 et 40 % en poids par rapport au **e-PP.**

7. Extension d'embout de pipette selon l'une des revendications précédentes, dans laquelle la teneur du PE dispersé dans la phase matricielle est égale ou inférieure à 15 % en poids de la composition.

8. Extension d'embout de pipette selon l'une des revendications précédentes, la composition comprenant en outre un agent d'alpha-nucléation polymérique dans une plage allant de 0,0001 à 5 % en poids de la composition.

9. Extension d'embout de pipette selon l'une des revendications précédentes, comprenant en outre un **élément de resserrement** (12) pour contrôler la profondeur d'insertion d'un embout de pipette (20) dans l'extension d'embout de pipette (1), l'élément de resserrement définissant une hauteur d'espace entre l'extrémité distale d'un embout de pipette inséré et l'extrémité distale de l'extension d'embout de pipette.

10. Extension d'embout de pipette selon la revendication 9, l'élément de resserrement étant réalisé sous la forme d'une structure de type tamis perméable au fluide, l'élément de resserrement (12) comprenant une plaque de guidage (14), des barres de support (15) et un canal de raccordement (16), la plaque de guidage (14) définissant ou étant raccordée à une butée (23) d'un embout de pipette (20), la plaque de guidage (14) étant raccordée à un côté intérieur (6) de la paroi extérieure (4) par les barres de support (15) à proximité mais de façon décalée par rapport à l'extrémité distale (3) de l'extension d'embout de pipette (1), délimitant avec le côté intérieur (6) de la paroi extérieure (4) un espace (17) d'une hauteur (h) au niveau de l'extrémité distale (3) de l'extension d'embout de pipette (1), les barres de support (15) fournissant un ou plusieurs passages pour raccorder fluidiquement l'espace (17) à la zone d'absorption de fluide (11).

11. Extension d'embout de pipette selon l'une des revendications précédentes, dans laquelle le ou les élément(s) d'écartement (10) ou l'élément de resserrement sont ou forment un **manchon** (21) qui est conçu pour recevoir et entourer sur toute la circonférence une extrémité distale d'un embout de pipette (20) dans la cavité intérieure (9), le manchon (21) étant adapté de façon étanche à la forme de l'extrémité distale d'un embout de pipette (20).

12. Extension d'embout de pipette (1) selon l'une des revendications précédentes, comprenant au moins deux, de préférence au moins trois éléments d'écartement (10) supplémentaires, chaque élément d'écartement (10) étant réalisé sous la forme d'une barre d'écartement (24) qui s'étend le long d'une direction depuis l'extrémité proximale (2) vers l'extrémité distale (3) de l'extension d'embout de pipette (1), la forme des barres d'écartement et la position des barres d'écartement étant conçues de telle sorte que chaque barre d'écartement (24) peut être en butée contre un côté extérieur d'un embout de pipette (20) lorsqu'elle est insérée dans l'extension d'embout de pipette (1).

13. Extension d'embout de pipette selon l'une des revendications 9 à 12, dans laquelle le ou les éléments d'écartement (10) est ou sont raccordé(s) au côté intérieur (6) de la paroi extérieure (4), et dans laquelle **l'élément de resserrement** (12) est raccordé au côté intérieur (6) de la paroi extérieure (4) de l'extension d'embout de pipette (1), définissant ainsi une **butée** (23) pour l'embout de pipette (20) et étant réalisé sous la forme d'une structure de type tamis perméable au fluide.

14. Extension d'embout de pipette (1) selon l'une des revendications précédentes, dans laquelle **l'élément d'écartement (10) est réalisé sous la forme d'un manchon (21)** pour recevoir et renfermer sur la circonférence une extrémité distale d'un embout de pipette (2), le manchon (21) étant ouvert au niveau de l'extrémité distale pour permettre à un liquide d'être libéré depuis un embout de pipette inséré (20) dans l'espace (17), et
dans laquelle la butée (23) est réalisée sous la forme d'un cylindre creux tubulaire allongé qui fournit un passage pour raccorder fluidiquement un embout de pipette inséré (20) avec l'espace (17),
dans laquelle le manchon (21) et la butée (23) sont raccordés fluidiquement pour fournir une connexion fluidique entre l'embout de pipette (20) et l'espace (17).

15. Extension d'embout de pipette (1) selon la revendication 1, dans laquelle la plaque de guidage (14) est réalisée sous la forme d'une plaque de guidage de type anneau (14) ou de type cale (14) ou de type plaque (14).

16. Extension d'embout de pipette selon l'une des revendications 10 à 15, dans laquelle la ou les barres de support (15) raccordant la plaque de guidage au côté intérieur (6) de la paroi extérieure (4), ou un élément de connexion (28) raccordant la paroi intérieure au manchon présente une section découpée (29) qui s'étend sur la hauteur (h) de l'espace immédiatement adjacente au côté intérieur (6) de la paroi extérieure (4).

17. Extension d'embout de pipette selon l'une des revendications précédentes, dans laquelle l'extension d'embout de pipette est fabriquée par moulage par injection de la composition de polypropylène correspondante.

18. Extension d'embout de pipette selon l'une des revendications précédentes, dans laquelle la ligne de séparation (30) d'au moins deux parties de moule utilisées pour fabriquer l'extension d'embout de pipette est déplacée dans l'orifice de distribution (8) ou dans le canal de raccordement (16).
